# EUROPEAN PATENT APPLICATION

(11) **EP 3 578 520 A1**
(43) Date of publication of application: **11.12.2019**
(21) Application number: 18767729.9
(22) Date of filing: 13.03.2018
(51) Int. Cl.: C02F 1/48, F24F 6/00, F24F 6/04

(54) **WATER TREATMENT DEVICE AND HUMIDIFYING DEVICE**

(30) Priority: 17.03.2017 JP 2017053555
(71) Applicant: Daikin Industries, Ltd., Osaka-shi, Osaka 530-8323 (JP)
(72) Inventor: OHDOU, Tsunahiro, Osaka-shi Osaka 530-8323 (JP); NISHIMURA, Masaya, Osaka-shi Osaka 530-8323 (JP); SUZUMURA, Kei, Osaka-shi Osaka 530-8323 (JP)
(74) Representative: Goddar, Heinz J.
(86) International application number: PCT/JP2018/009784
(87) International publication number: WO 2018/168868

(57) **Abstract**

In a water passage (45), a first inflow-side insulator (70), a second inflow-side insulator (75), and an electric-discharge water tank (50) are each formed like a sealed container. A tap water pipe (5) is connected to the electric-discharge water tank (50) via inflow-side insulators (70, 75), and the electric-discharge water tank (50) is connected to water supply headers (82a, 82b). The water passage (45) has a hermetic structure that is open to the atmosphere only at a supply opening of each of the water supply headers (82a, 82b). Therefore, when pressurized tap water is supplied to the water passage (45), water flows through the water passage (45). As a result, restrictions on the positional relationship between a supply target of treated water and a water treatment device (40) are reduced, and the usability of the water treatment device (40) is improved.

## Description

### Technical Field

The present invention relates to a water treatment device that produces treated water including a sterilizing component generated by electric discharge and to a humidifying apparatus including the water treatment device.

### Background Art

To date, a water treatment device that generates a sterilizing component by electric discharge, that purifies water by using the sterilizing component, and that produces treated water including the sterilizing component is known.

PTL 1 discloses a humidifying apparatus including a sterile-water producing device that is constituted by a water treatment device of this type. The sterile-water producing device produces a sterilizing component by causing electric discharge in a bubble that is formed in water, and generates sterile water (treated water) including the sterilizing component. Sterile water produced in the sterile-water producing device is supplied to a humidifying element by gravity.

### Citation List

### Patent Literature

PTL 1: Japanese Unexamined Patent Application Publication No. 2015-190702

### Summary of Invention

### Technical Problem

In the sterile-water producing device disclosed in PTL 1, a treatment tank, for generating a sterilizing component by electric discharge, has an upper surface that is open. Therefore, in order to reliably supply sterile water produced in the treatment tank, it is necessary not only to dispose the treatment tank above the humidifying element but also to provide a sufficient drop (distance) from the treatment tank to the humidifying element. Thus, the sterile-water producing device described in PTL 1 has a problem in usability, due to the restriction on positional relationship with the humidifying element, which is a supply target of sterile water.

It is conceivable that this problem may be solved by using a pump to supply sterile water produced by the sterile-water producing device to the supply target such as the humidifying element. However, because the pump is necessary, the configuration of the device may become complex and the manufacturing cost may increase.

The present invention has been made in considerations of such points, and an object of the present invention is to improve the usability of a water treatment device, for producing treated water including a sterilizing component, by reducing restrictions on the positional relationship with a supply target of treated water, while suppressing increase in complexity of configuration and increase in manufacturing cost.

### Solution to Problem

A first aspect of the present disclosure is directed to a water treatment device. The water treatment device includes: a water treatment tank (50) that is formed like a sealed container and that produces treated water including a sterilizing component; an inflow passage (60) that is connected to water supply equipment that supplies pressurized water and through which water supplied from the water supply equipment flows into the water treatment tank (50); and an outflow passage (80) that is connected to the water treatment tank (50) and through which the treated water flows out from the water treatment tank (50). The inflow passage (60), the water treatment tank (50), and the outflow passage (80) constitute a water passage (45). The water passage (45) has a hermetic structure that is open to an atmosphere only at a terminal end portion of the outflow passage (80).

In the water passage (45) according to the first aspect, water that is supplied from the water supply equipment is supplied to the water treatment tank (50) through the inflow passage (60), and treated water that is produced in the water treatment tank (50) is fed to a supply target of treated water through the outflow passage (80). Water that flows into the inflow passage (60) from the water supply equipment is in a pressurized state (has a pressure higher than the atmospheric pressure). Pressure at an initial end portion of the inflow passage (60) is substantially equal to the pressure of water supplied from the water supply equipment. On the other hand, pressure at the terminal end portion of the outflow passage (80), which is open to the atmosphere, is substantially equal to the atmospheric pressure. Moreover, the water passage (45) has a hermetic structure that is open to the atmosphere only at the terminal end portion of the outflow passage (80). Therefore, the water passage (45) is maintained in a state in which the internal pressure is higher than the atmospheric pressure in the entirety thereof from the initial end portion of the inflow passage (60) to the terminal end portion of the outflow passage (80). Then, in the water passage (45), due to the pressure difference between the initial end portion of the inflow passage (60) and the terminal end portion of the outflow passage (80), water flows from the initial end portion of the inflow passage (60) toward the terminal end portion of the outflow passage (80).

According to a second aspect of the present disclosure, in the first aspect, the water treatment tank (50) includes a first electrode (55a) and a second electrode (55b) for causing electric discharge and is configured to generate a sterilizing component by electric discharge.

In the second aspect, the water treatment tank (50) generates a sterilizing component by electric discharge and produces treated water by adding the sterilizing component to water supplied from the water supply equipment.

According to a third aspect of the present disclosure, in the second aspect, the water treatment tank (50) includes a partition plate (52, 56) that has electrically insulating properties and that divides an inner space of the water treatment tank (50) into a first tank (54a) in which the first electrode (55a) is disposed and a second tank (54b) in which the second electrode (55b) is disposed; an electric discharge hole (58) that extends through the partition plate (52, 56) and that is located in water is formed in the partition plate (52, 56); and the water treatment tank (50) is configured to cause electric discharge in a bubble (C) formed in the electric discharge hole (58).

In the third aspect, when a voltage is applied to the first electrode (55a) and the second electrode (55b), the bubble (C) is formed in the electric discharge hole (58), which is located in water, and a potential difference occurs between water in the first tank (54a) and water in the second tank (54b). Then, in the bubble (C) formed in the electric discharge hole (58), when dielectric breakdown occurs between the gas-liquid interface on the first tank (54a) side and the gas-liquid interface on the second tank (54b) side, electric discharge occurs in the bubble (C). As a result, a sterilizing component, such as hydroxyl radical or hydrogen peroxide, is generated in water in the first tank (54a) and the second tank (54b).

According to a fourth aspect of the present disclosure, in the third aspect, the outflow passage (80) includes a first outflow pipe (81a) through which the treated water flows out from the first tank (54a) of the water treatment tank (50), and a second outflow pipe (81b) through which the treated water flows out from the second tank (54b) of the water treatment tank (50); an initial end of the first outflow pipe (81a), the initial end having an opening in the first tank (54a), is disposed above a lower end of the first electrode (55a) and the electric discharge hole (58); and an initial end of the second outflow pipe (81b), the initial end having an opening in the second tank (54b), is disposed above a lower end of the second electrode (55b) and the electric discharge hole (58).

In the first tank (54a) according to the fourth aspect, until the water surface reaches the initial end of the first outflow pipe (81a), water does not flow into the first outflow pipe (81a). Therefore, the water surface in the first tank (54a) is located above the lower end of the first electrode (55a) and electric discharge hole (58). Moreover, in the second tank (54b) according to this aspect, until the water surface reaches the initial end of the second outflow pipe (81b), water does not flow into the second outflow pipe (81b). Therefore, the water surface in the second tank (54b) is located above the lower end of the second electrode (55b) and the electric discharge hole (58). Accordingly, in the water treatment tank (50) according to this aspect, the first electrode (55a) and the second electrode (55b) are constantly immersed in water, and the electric discharge hole (58) is constantly located in water.

According to a fifth aspect of the present disclosure, in the third aspect, the inflow passage (60) includes an inflow-side collective passage (63) that is connected to the water supply equipment, a first inflow-side branch passage (64a, 65a) that connects the inflow-side collective passage (63) to the first tank (54a) of the water treatment tank (50), and a second inflow-side branch passage (64b, 65b) that connects the inflow-side collective passage (63) to the second tank (54b) of the water treatment tank (50); and, in each of the first inflow-side branch passage (64a, 65a) and the second inflow-side branch passage (64b, 65b), an inflow-side insulator (70, 75) that is configured to electrically insulate water that flows thereinto and water that flows out therefrom from each other is provided.

Here, in a state in which a voltage is applied to the first electrode (55a) and the second electrode (55b), the electric potential of water in the first tank (54a) and the second tank (54b) is different from the electric potential of water supplied from the water supply equipment to the inflow-side collective passage (63). Therefore, if water in the first tank (54a) and the second tank (54b) is electrically connected to water that flows in the inflow-side collective passage (63), in the state in which a voltage is applied to the first electrode (55a) and the second electrode (55b), water cannot be supplied to the water treatment tank (50) through the inflow passage (60).

In contrast, in the fifth aspect, because the first inflow-side insulator (70) is provided in the first inflow-side branch passage (64a, 65a), water in the first tank (54a) is electrically insulated from water in the inflow-side collective passage (63). Moreover, in this aspect, because the second inflow-side insulator (75) is provided in the second inflow-side branch passage (64b, 65b), water in the second tank (54b) is electrically insulated from water in the inflow-side collective passage (63). Therefore, in this aspect, in a state in which a voltage is applied to the first electrode (55a) and the second electrode (55b) and electric discharge occurs in the water treatment tank (50), it is possible to supply water to the water treatment tank (50) through the inflow passage (60).

According to a sixth aspect of the present disclosure, in the fifth aspect, the inflow-side insulator (70, 75) is formed like a sealed container filled with air, and is configured to electrically insulate water that flows thereinto and water that flows out therefrom from each other by causing air to exist between the water that flows thereinto and the water that flows out therefrom.

In the sixth aspect, the inflow-side insulator (70, 75) divides the flow of water from the inlet to the outlet thereof, and, by causing air to exist between the divided portions of water, electrically insulates water that flows thereinto and water that flows out therefrom from each other. The inflow-side insulator (70, 75) is formed like a sealed container. Therefore, in a state in which water having a pressure higher than the atmospheric pressure is supplied to the water passage (45), the internal pressure of the inflow-side insulator (70, 75) is maintained to be higher than the atmospheric pressure.

According to a seventh aspect of the present disclosure, in the third aspect, the outflow passage (80) includes a first outflow-side branch passage (81a, 85a) that is connected to the first tank (54a) of the water treatment tank (50), a second outflow-side branch passage (81b, 85b) that is connected to the second tank (54b) of the water treatment tank (50), and an outflow-side collective passage (84) that is connected to the first outflow-side branch passage (81a, 85a) and the second outflow-side branch passage (81b, 85b); in the first outflow-side branch passage (81a, 85a), a first outflow-side insulator (90) that electrically insulates water in the first tank (54a) from water in the outflow-side collective passage (84) is provided; and, in the second outflow-side branch passage (81b, 85b), a second outflow-side insulator (95) that electrically insulates water in the second tank (54b) from water in the outflow-side collective passage (84) is provided.

Here, the electric potential of water in the outflow-side collective passage (84), where treated water flowed out from the first tank (54a) and treated water flowed out from the second tank (54b) join, is different from the electric potential of water in the first tank (54a) and the second tank (54b). Therefore, if water in the first tank (54a) and the second tank (54b) is electrically connected to water that flows in the outflow-side collective passage (84), in a state in which a voltage is applied to the first electrode (55a) and the second electrode (55b), water cannot be caused to flow out from the water treatment tank (50) through the outflow passage (80).

In contrast, in the seventh aspect, because the first outflow-side insulator (90) is provided in the first outflow-side branch passage (81a, 85a), water in the first tank (54a) is electrically insulated from water in the outflow-side collective passage (84). Moreover, in this aspect, because the second outflow-side insulator (95) is provided in the second outflow-side branch passage (81b, 85b), water in the second tank (54b) is electrically insulated from water in the outflow-side collective passage (84). Therefore, in this aspect, in a state in which a voltage is applied to the first electrode (55a) and the second electrode (55b) and electric discharge occurs in the water treatment tank (50), it is possible to cause treated water to flow out from the water treatment tank (50) through the outflow passage (80).

According to an eighth aspect of the present disclosure, in the seventh aspect, each of the first outflow-side insulator (90) and the second outflow-side insulator (95) is formed like a sealed container filled with air, and is configured to electrically insulate water that flows thereinto and water that flows out therefrom from each other by causing air to exist between the water that flows thereinto and the water that flows out therefrom.

In the eighth aspect, each of the outflow-side insulators (90, 95) divides the flow of water from the inlet to the outlet thereof, and, by causing air to exist between the divided portions of water, electrically insulates water that flows thereinto and water that flows out therefrom from each other. Each of the outflow-side insulators (90, 95) is formed like a sealed container. Therefore, in a state in which water having a pressure higher than the atmospheric pressure is supplied to the water passage (45), the internal pressure of each of the outflow-side insulators (90, 95) is maintained to be higher than the atmospheric pressure.

A ninth aspect of the present disclosure is directed to a humidifying apparatus that includes the water treatment device (40) according to the third aspect and that humidifies air by evaporating treated water produced in the water treatment tank (50) of the water treatment device (40). The humidifying apparatus includes a first humidifying element (23a) for evaporating the treated water supplied from the first tank (54a) of the water treatment tank (50) of the water treatment device (40) by causing the treated water to contact air; and a second humidifying element (23b) for evaporating the treated water supplied from the second tank (54b) of the water treatment tank (50) of the water treatment device (40) by causing the treated water to contact air, the second humidifying element (23b) being electrically insulated from the first humidifying element (23a). The outflow passage (80) of the water treatment device (40) includes a first supply passage (81a, 82a) that supplies the treated water in the first tank (54a) of the water treatment tank (50) to the first humidifying element (23a) so that treated water in the first humidifying element (23a) is electrically connected to the treated water in the first tank (54a), and a second supply passage (81b, 82b) that supplies the treated water in the second tank (54b) of the water treatment tank (50) to the second humidifying element (23b) so that treated water in the second humidifying element (23b) is electrically connected to the treated water in the second tank (54b). The water treatment device (40) further includes an alternating electric power source (42) that applies an alternating voltage to the first electrode (55a) and the second electrode (55b).

In the ninth aspect, the first humidifying element (23a) and the second humidifying element (23b) are provided in the humidifying apparatus (1). To the first humidifying element (23a), treated water in the first tank (54a) of the water treatment tank (50) is supplied through the first supply passage (81a, 82a). Treated water in the first humidifying element (23a) is electrically connected to treated water in the first tank (54a) via treated water that flows in the first supply passage (81a, 82a). To the second humidifying element (23b), treated water in the second tank (54b) of the water treatment tank (50) is supplied through the second supply passage (81b, 82b). Treated water in the second humidifying element (23b) is electrically connected to treated water in the second tank (54b) via treated water that flows in the second supply passage (81b, 82b).

In the ninth aspect, the alternating electric power source (42) is provided in the water treatment device (40). When the alternating electric power source (42) applies an alternating voltage to the first electrode (55a) and the second electrode (55b), the potential difference between water in the first tank (54a) and water in the second tank (54b) alternates between positive and negative. As described above, treated water in the first humidifying element (23a) is electrically connected to treated water in the first tank (54a), and treated water in the second humidifying element (23b) is electrically connected to treated water in the second tank (54b). Therefore, the potential difference between water in the first humidifying element (23a) and water in the second humidifying element (23b) also alternates between positive and negative.

Here, when water evaporates in a humidifying element, calcium dissolved in water may precipitate and may adhere to the humidifying element. However, in the ninth aspect, the potential difference between water in the first humidifying element (23a) and water in the second humidifying element (23b) frequently alternates between positive and negative. In one of the first humidifying element (23a) and the second humidifying element (23b) that has a higher electric potential, calcium does not precipitate and becomes ionized. Therefore, the amount of scale that may adhere to the humidifying element decreases.

### Advantageous Effects of Invention

In the first aspect, the water passage (45) has a hermetic structure that is open to the atmosphere only at the terminal end portion of the outflow passage (80). Therefore, in the water passage (45), due to the pressure difference between the initial end portion of the inflow passage (60) and the terminal end portion of the outflow passage (80), water flows from the initial end portion of the inflow passage (60) toward the terminal end portion of the outflow passage (80). Accordingly, with the present aspect, even in a state in which there is almost no height difference between a supply target of treated water and the water treatment tank (50), it is possible to supply treated water from the water treatment tank (50) to the supply target without using a pump. As a result, it is possible to improve the usability of the water treatment device (40) by reducing restrictions on the positional relationship between a supply target of treated water and the water treatment tank (50), while suppressing increase in complexity of configuration and increase in manufacturing cost.

In the fourth aspect, by appropriately setting the position of the initial end of the first outflow pipe (81a) and the position of the initial end of the second outflow pipe (81b), the first electrode (55a) and the second electrode (55b) are maintained to be immersed in water and the electric discharge hole (58) is maintained to be located in water. Accordingly, with this aspect, it is possible to reliably cause electric discharge in the electric discharge hole (58) of the water treatment tank (50) and to reliably produce treated water including a sterilizing component in the water treatment tank (50).

In the fifth aspect, the inflow-side insulator (70, 75) is provided in each of the first inflow-side branch passage (64a, 65a) and the second inflow-side branch passage (64b, 65b). Therefore, in a state in which electric discharge occurs in the water treatment tank (50), it is possible to supply water to the water treatment tank (50) through the inflow passage (60). As a result, it is possible to continuously supply water to the water treatment tank (50).

In the sixth aspect, the inflow-side insulator (70, 75) is formed like a sealed container filled with air. Therefore, water that flows thereinto and water that flows out therefrom can be electrically insulated from each other by using the filling air, and, at the same time, it is possible to maintain the internal pressure of each of the inflow-side insulators (70, 75) to be higher than the atmospheric pressure. Accordingly, with this aspect, while maintaining the hermeticity of the inflow passage (60), water in the water treatment tank (50) can be electrically insulated from water in the inflow-side collective passage (63).

In the seventh aspect, the outflow-side insulators (90, 95) are respectively provided in the first outflow-side branch passage (81a, 85a) and the second outflow-side branch passage (81b, 85b). Therefore, in a state in which electric discharge occurs in the water treatment tank (50), it is possible to cause treated water to flow out from the water treatment tank (50) through the outflow passage (80). As a result, it is possible to continuously obtain treated water from the water treatment tank (50).

In the eighth aspect, each of the outflow-side insulators (90, 95) is formed like a sealed container filled with air. Therefore, water that flows thereinto and water that flows out therefrom can be electrically insulated from each other by using the filling air, and, at the same time, it is possible to maintain the internal pressure of each of the outflow-side insulators (90, 95) to be higher than the atmospheric pressure. Accordingly, with this aspect, while reliably maintaining the hermeticity of the outflow passage (80), water in the water treatment tank (50) can be electrically insulated from water in the outflow-side collective passage (84).

In the ninth aspect, treated water in the first humidifying element (23a) is electrically connected to treated water in the first tank (54a), and treated water in the second humidifying element (23b) is electrically connected to treated water in the second tank (54b). When the alternating electric power source (42) applies an alternating voltage to the first electrode (55a) and the second electrode (55b), the potential difference between water in the first humidifying element (23a) and water in the second humidifying element (23b) frequently alternates between positive and negative. Therefore, in each of the humidifying elements (23a, 23b), precipitation of calcium included in treated water can be suppressed, and the lifetime of the humidifying elements (23a, 23b) can be prolonged.

### Brief Description of Drawings

[Fig. 1] Fig. 1 is a schematic sectional view illustrating the configuration of an air-handling unit according to a first embodiment.
[Fig. 2] Fig. 2 is a piping system diagram illustrating the configuration of a water treatment device according to the first embodiment.
[Fig. 3] Fig. 3 is a schematic sectional view illustrating the configuration of an electric-discharge water tank according to the first embodiment.
[Fig. 4] Fig. 4 is a partial enlarged view of the electric-discharge water tank according to the first embodiment.
[Fig. 5] Fig. 5 is a partial enlarged view of an electric discharge plate according to the first embodiment.
[Fig. 6] Fig. 6 illustrates a cross section of an insulating member and a humidifying element according to the first embodiment.
[Fig. 7] Fig. 7 is a schematic perspective view of the insulating member according to the first embodiment.
[Fig. 8] Fig. 8 illustrates a cross section of an insulating member and a humidifying element according to modification 3 of the first embodiment.
[Fig. 9] Fig. 9 is a schematic perspective view of the insulating member according to modification 3 of the first embodiment.
[Fig. 10] Fig. 10 illustrates a cross section of an insulating member and a humidifying element according to modification 4 of the first embodiment.
[Fig. 11] Fig. 11 is a schematic perspective view of the insulating member according to modification 4 of the first embodiment.
[Fig. 12] Fig. 12 illustrates a cross section of an insulating member and a humidifying element according to modification 5 of the first embodiment.
[Fig. 13] Fig. 13 is a schematic perspective view of the insulating member according to modification 5 of the first embodiment.
[Fig. 14] Fig. 14 is a piping system diagram illustrating the configuration of a water treatment device according to a second embodiment.
[Fig. 15] Fig. 15 is a piping system diagram illustrating the configuration of a water treatment device according to a third embodiment.
[Fig. 16] Fig. 16 is a piping system diagram illustrating the configuration of a water treatment device according to a second modification of other embodiments.
[Fig. 17] Fig. 17 is a piping system diagram illustrating the configuration of a water treatment device according to a third modification of other embodiments.
[Fig. 18] Fig. 18 is a piping system diagram illustrating the configuration of a water treatment device according to a fourth modification of other embodiments.
[Fig. 19] Fig. 19 is a piping system diagram illustrating the configuration of a water treatment device according to a fifth modification of other embodiments.

### Description of Embodiments

Embodiments of the present invention will be described in detail with reference to the drawings. Embodiments and modifications described below are basically preferred examples and are not intended to restrict the present invention, applications of the present invention, and uses of the present invention.

### <<First Embodiment>>

A first embodiment will be described. An air-handling unit (1) according to the present embodiment constitutes a humidifying apparatus and is configured to adjust the temperature of air and to humidify air. The air-handling unit (1) according to the present embodiment includes a water treatment device (40) that produces treated water for humidifying air.

### - Configuration of Air-Handling Unit -

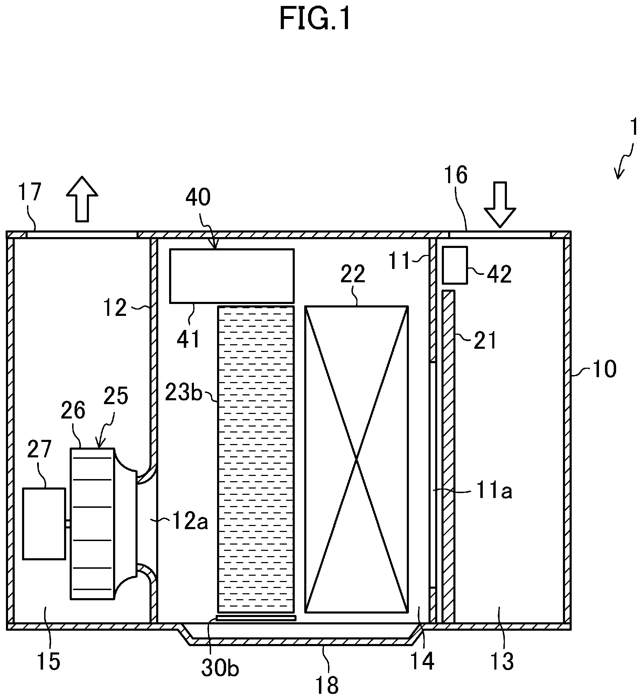

As illustrated in Fig. 1, the air-handling unit (1) includes a casing (10) that has a hollow rectangular-parallelepiped shape. The inner space of the casing (10) is divided by a first separation wall plate (11) and a second separation wall plate (12) into an inlet chamber (13), a middle chamber (14), and an outlet chamber (15). In the casing (10), the inlet chamber (13), the middle chamber (14), and the outlet chamber (15) are arranged in order from one end to the other end in the longitudinal direction thereof.

A suction port (16) is formed in a part of a top plate of the casing (10) facing the inlet chamber (13), and a blow-out port (17) is formed in a part of the top plate facing the outlet chamber (15). A suction duct (not shown) is connected to the casing (10) so as to communicate with the suction port (16), and a blow-out duct (not shown) is connected to the casing (10) so as to communicate with the blow-out port (17). A part of a bottom plate (34) of the casing (10) that faces the middle chamber (14) is formed as a drain pan (18) that is recessed downward.

A first opening (11a) is formed in the first separation wall plate (11). The inlet chamber (13) communicates with the middle chamber (14) via the first opening (11a). A second opening (12a) is formed in the second separation wall plate (12). The middle chamber (14) communicates with the outlet chamber (15) via the second opening (12a).

The air-handling unit (1) includes an air filter (21), a heat exchanger (22), a first humidifying element (23a), a second humidifying element (23b), and a fan unit (25). The air filter (21) is disposed in the inlet chamber (13). The heat exchanger (22) and the humidifying elements (23a, 23b) are disposed in the middle chamber (14). In the middle chamber (14), the humidifying elements (23a, 23b) are disposed on the downstream side of the heat exchanger (22). The fan unit (25) is disposed in the outlet chamber (15).

The air filter (21) is a member for collecting foreign substances such as dust in air. The air filter (21) covers the first opening (11a).

The heat exchanger (22) is a so-called cross-fin-type fin-and-tube heat exchanger. The heat exchanger (22) exchanges heat between heat medium water, which is supplied from a heat source device (not shown), and air. The heat source device is constituted by, for example, a chiller device that cools or heats heat medium water by performing a refrigeration cycle.

Each of the humidifying elements (23a, 23b) is a member for evaporating water supplied thereto by causing the water to contact air. Each of the humidifying elements (23a, 23b) is made of a resin that is shaped like a sponge or a nonwoven fabric, and is configured to be capable of holding a certain amount of water and capable of passing air therethrough. The first humidifying element (23a) and the second humidifying element (23b) are arranged in the depth direction of the casing (10) (a direction perpendicular to the plane of Fig. 1).

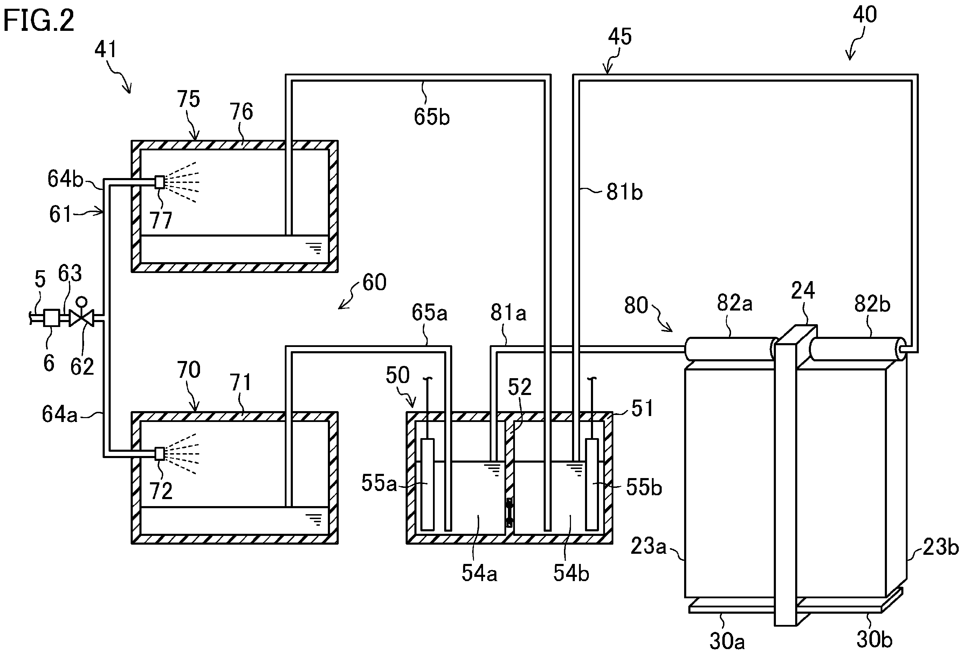

As illustrated also in Fig. 2, insulating members (30a, 30b) are disposed below the respective humidifying elements (23a, 23b). A first insulating member (30a) is disposed so as to face a lower surface of the first humidifying element (23a), and is configured to electrically insulate water in the drain pan (18) from water in the first humidifying element (23a). A second insulating member (30b) is disposed so as to face a lower surface of the second humidifying element (23b), and is configured to electrically insulate water in the drain pan (18) from water in the second humidifying element (23b). The configuration and the insulating function of each of the insulating members (30a, 30b) will be described below.

As illustrated in Fig. 2, an insulating plate (24) is disposed between the first humidifying element (23a) and the second humidifying element (23b). The insulating plate (24) is disposed so as to face a side surface of each of the humidifying elements (23a, 23b) and electrically insulates water in the first humidifying element (23a) and water in the second humidifying element (23b) from each other.

As illustrated in Fig. 1, the fan unit (25) includes an impeller (26) and a fan motor (27) that drives the impeller (26). The impeller (26) is disposed in such a way that a suction port (16) thereof covers the second opening (12a). The impeller (26) blows out air, which is sucked from the suction port (16), in the circumferential direction.

The water treatment device (40) includes a body unit (41) and an electric power source unit (42). The body unit (41) is configured to produce treated water including a sterilizing component. The body unit (41) is disposed in the middle chamber (14) and supplies treated water to the humidifying elements. The electric power source unit (42) is disposed in the inlet chamber (13) and is electrically connected to the body unit (41) via wiring (not shown). Detailed configuration of the water treatment device (40) will be described below.

### - Operation of Air-Handling Unit -

The air-handling unit (1) selectively performs a cooling operation and a heating operation.

In a cooling operation, a heat source device supplies heat medium water having a low temperature (for example, about 5°C) to the heat exchanger (22). In the cooling operation, the water treatment device (40) is stopped, and does not supply treated water to the humidifying elements (23a, 23b).

In the cooling operation, air flows into the inlet chamber (13) from the suction port (16), passes through the air filter (21), and then flows into the middle chamber (14). While passing through the heat exchanger (22), the air is cooled by exchanging heat with the heat medium water. At this time, water included in air condenses and becomes drain water. The drain water flows down into the drain pan (18) and is drained to the outside of the casing (10). The air, which has been cooled and dehumidified while passing through the heat exchanger (22), passes through the humidifying elements (23a, 23b) and then is sucked into the impeller (26). The air is blown out from the impeller (26) and is supplied into a room through the blow-out port (17).

In the heating operation, the heat source device supplies heat medium water having a high temperature (for example, about 45°C) to the heat exchanger (22). In the heating operation, the water treatment device (40) supplies treated water to the humidifying elements. Detailed operation of the water treatment device (40) will be described below.

In the heating operation, air flows into the inlet chamber (13) from the suction port (16), passes through the air filter (21), and then flows into the middle chamber (14). While passing through the heat exchanger (22), the air is heated by exchanging heat with heat medium water. Subsequently, the air passes through the humidifying elements (23a, 23b). In the humidifying elements (23a, 23b), treated water, which is supplied from the water treatment device (40), evaporates and is added to air. The air, which has been humidified while passing through the humidifying elements (23a, 23b), is sucked into the impeller (26). The air, which is blown out from the impeller (26), is supplied into a room through the blow-out port (17).

Treated water that is not evaporated in the humidifying elements (23a, 23b) flows down from the lower ends of the humidifying elements (23a, 23b). The treated water that has flowed down from the humidifying elements (23a, 23b) passes through the insulating members (30a, 30b), flows down into the drain pan (18), and is drained to the outside of the casing (10). As the treated water that has flowed down from the humidifying elements (23a, 23b) passes through the insulating members (30a, 30b), water in the drain pan (18) is electrically insulated from water in the humidifying elements (23a, 23b). The insulating function of the insulating members (30a, 30b) will be described below.

### - Configuration of Water Treatment Device -

As illustrated in Fig. 2, the body unit (41) of the water treatment device (40) includes an electric-discharge water tank (50) that produces treated water by causing electric discharge, an inflow passage (60) through which tap water is supplied to the electric-discharge water tank (50), and an outflow passage (80) through which treated water flows out from the electric-discharge water tank (50) and supplied to the humidifying elements (23a, 23b). The electric-discharge water tank (50), the inflow passage (60), and the outflow passage (80) constitute a water passage (45) through which water flows from a tap water pipe (5) toward the humidifying elements (23a, 23b).

The tap water pipe (5) is a pipe included in a pipe channel of tap water supply equipment. The tap water supply equipment is equipment that supplies water, which is pressurized by a pump, through a pipe channel. Accordingly, the tap water pipe (5) corresponds to "water supply equipment that supplies pressurized water".

### <Electric-Discharge Water Tank>

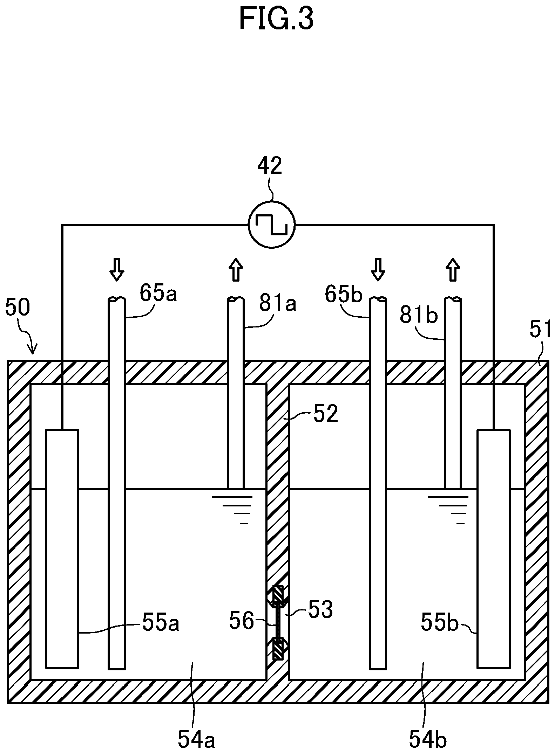

As illustrated in Fig. 3, the electric-discharge water tank (50), which is a water treatment tank, includes a water tank body (51). The water tank body (51) is a member that is formed like a sealed container having an upper surface that is closed. The water tank body (51) has a hollow rectangular-parallelepiped shape. The water tank body (51) has a central separation wall (52). The central separation wall (52) is disposed at a central part of the water tank body (51) in the width direction (the left-right direction in Fig. 3). The inner space of the water tank body (51) is divided by the central separation wall (52) into a first tank (54a) and a second tank (54b). The material of the water tank body (51) and the central separation wall (52) is an electrically insulating resin.

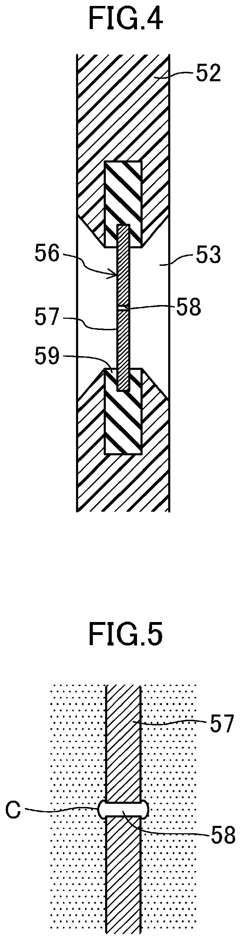

A through-hole (53), which extends through the central separation wall (52) in the thickness direction, is formed in a lower part of the central separation wall (52). As illustrated in Fig. 4, each end portion of the through-hole (53) has a shape whose diameter increases toward a surface of the central separation wall (52).

An electric discharge member (56) is disposed in the central separation wall (52). The electric discharge member (56) includes an electric discharge plate (57) and a holder ring (59). The central separation wall (52) and the electric discharge member (56) constitute a partition plate that has electrically insulating properties and that separates the first tank (54a) and the second tank (54b) from each other.

The electric discharge plate (57) is a circular plate that is made of an electrically insulating material such as ceramics. Examples of the ceramics include aluminum nitride, silicon nitride, zirconia, and alumina. A very small electric discharge hole (58) is formed at substantially the center of the electric discharge plate (57). The electric discharge hole (58) is a circular through-hole whose diameter is about 0.1 mm, and is designed so that electrical resistance during electric discharge is several megaohms.

The holder ring (59) is a ring-shaped (or doughnut-shaped) member that is made of an electrically insulating material such as silicone rubber. The holder ring (59) is attached to the electric discharge plate (57) so as to surround the periphery of the electric discharge plate (57).

The electric discharge member (56) is disposed so as to extend across the through-hole (53) of the central separation wall (52). To be specific, the holder ring (59) of the electric discharge member (56) is embedded in the central separation wall (52), and the electric discharge plate (57) of the electric discharge member (56) extends across the through-hole (53) of the central separation wall (52). That is, the through-hole (53) of the central separation wall (52) is closed by the electric discharge member (56). The first tank (54a) and the second tank (54b), which are separated by the central separation wall (52), communicate with each other via only the electric discharge hole (58) of the electric discharge member (56).

In the electric-discharge water tank (50), a first electrode (55a) is disposed in the first tank (54a), and a second electrode (55b) is disposed in the second tank (54b). Each of the first electrode (55a) and the second electrode (55b) is, for example, an elongated rectangular-plate-shaped member that is made of a metal material having high anti-corrosiveness. Each of the first electrode (55a) and the second electrode (55b) is disposed in a position such that the longitudinal direction thereof is the up-down direction. The first electrode (55a) and the second electrode (55b) are electrically connected to the electric power source unit (42). The electric power source unit (42) will be described below.

### <Inflow Passage>

As illustrated in Fig. 2, the inflow passage (60) is constituted by an inlet pipe (61), first and second inflow-side insulators (70, 75), and first and second inflow-side connection pipes (65a, 65b).

The inlet pipe (61) includes a collective pipe (63), a first branch pipe (64a), and a second branch pipe (64b). One end of the collective pipe (63) is connected to the tap water pipe (5) via a joint (6). An electromagnetic valve (62) is disposed in the collective pipe (63). One end of the first branch pipe (64a) and one end of the second branch pipe (64b) are connected to the other end of the collective pipe (63). The other end of the first branch pipe (64a) is connected to a first inflow-side insulator (70). The other end of the second branch pipe (64b) is connected to a second inflow-side insulator (75).

The first inflow-side connection pipe (65a) is a pipe that connects the first inflow-side insulator (70) to the first tank (54a) of the electric-discharge water tank (50). The first inflow-side connection pipe (65a) has an opening at a bottom part of the first tank (54a) of the electric-discharge water tank (50). The second inflow-side connection pipe (65b) is a pipe that connects the second inflow-side insulator (75) to the second tank (54b) of the electric-discharge water tank (50). The second inflow-side connection pipe (65b) has an opening at a bottom part of the second tank (54b) of the electric-discharge water tank (50).

In the inflow passage (60) according to the present embodiment, the collective pipe (63) of the inlet pipe (61) constitutes an inflow-side collective passage. The first branch pipe (64a) and the first inflow-side connection pipe (65a) of the inlet pipe (61) constitute a first inflow-side branch passage. The second branch pipe (64b) and the second inflow-side connection pipe (65b) of the inlet pipe (61) constitute a second inflow-side branch passage.

The inflow-side insulators (70, 75) respectively include body containers (71, 76) and spray nozzles (72, 77). The body containers (71, 76) are sealed containers filled with air.

In the first inflow-side insulator (70), the first branch pipe (64a) of the inlet pipe (61) penetrates into the body container (71), and has an opening in an upper part of the inner space of the body container (71). The spray nozzle (72) is attached to an end portion of the first branch pipe (64a), which has an opening in the inner space of the body container (71). The spray nozzle (72) sprays tap water supplied from the first branch pipe (64a). In the first inflow-side insulator (70), the first inflow-side connection pipe (65a) has an opening in a lower part of the inner space of the body container (71) (that is, at a position lower than the spray nozzle (72)).

In the second inflow-side insulator (75), the second branch pipe (64b) of the inlet pipe (61) penetrates into the body container (76), and has an opening in an upper part of the inner space of the body container (76). The spray nozzle (77) is attached to an end portion of the second branch pipe (64b), which has the opening in the inner space of the body container (76). The spray nozzle (77) sprays tap water supplied from the second branch pipe (64b). In the second inflow-side insulator (75), the second inflow-side connection pipe (65b) has an opening in a lower part of the inner space of the body container (76) (that is, at a position lower than the spray nozzle (77)).

In the respective inflow-side insulators (70, 75), tap water, which is sprayed from the spray nozzles (72, 77) to the inner spaces of the body containers (71, 76), becomes water droplets and drops, is accumulated in the body containers (71, 76), and subsequently flows into the inflow-side connection pipes (65a, 65b). In the body containers (71, 76), the positions of water surfaces in the inner spaces substantially coincide with the positions of the open ends of the inflow-side connection pipes (65a, 65b). Accordingly, in the respective inflow-side insulators (70, 75), the water surfaces in the inner spaces of the body containers (71, 76) are lower than the spray nozzles (72, 77). Therefore, in the respective inflow-side insulators (70, 75), air exists between water droplets that are sprayed from the spray nozzles (72, 77) and that drop, and water that flows into the body containers (71, 76) and water that flows out from the body containers (71, 76) are electrically insulated from each other.

### <Outflow Passage>

As illustrated in Fig. 2, the outflow passage (80) is constituted by first and second outflow pipes (81a, 81b) and first and second water supply headers (82a, 82b).

One end of the first outflow pipe (81a) has an opening in the first tank (54a) of the electric-discharge water tank (50), and other end of the first outflow pipe (81a) is connected to the first water supply header (82a). In the first tank (54a) of the electric-discharge water tank (50), the open end of the first outflow pipe (81a) is disposed above the lower end of the first electrode (55a) and above the electric discharge hole (58). One end of the second outflow pipe (81b) has an opening in the second tank (54b) of the electric-discharge water tank (50), and the other end of the second outflow pipe (81b) is connected to the second water supply header (82b). In the second tank (54b) of the electric-discharge water tank (50), the open end of the second outflow pipe (81b) is disposed above the lower end of the second electrode (55b) and above the electric discharge hole (58).

Each of the water supply headers (82a, 82b) is a cylindrical member, both ends of which are closed. The first water supply header (82a) is disposed so as to be in contact with an upper surface of the first humidifying element (23a). The second water supply header (82b) is disposed so as to be in contact with an upper surface the second humidifying element (23b). A water supply opening (not shown) is formed in a lower part of each of water supply headers (82a, 82b). Each of the water supply headers (82a, 82b) forms a terminal end portion of the outflow passage (80), and the inner space of each of the water supply headers (82a, 82b) is open to the atmosphere at the water supply opening.

As described above, each of the water supply headers (82a, 82b) is disposed so as to be in contact with the upper surface of a corresponding one of the humidifying elements (23a, 23b). Therefore, in a state in which water is supplied from the first water supply header (82a) to the first humidifying element (23a), water in the first water supply header (82a) is electrically connected to water in the first humidifying element (23a). In a state in which water is supplied from the second water supply header (82b) to the second humidifying element (23b), water in the second water supply header (82b) is electrically connected to water in the second humidifying element (23b).

The first outflow pipe (81a) and the first water supply header (82a) constitute a first supply passage that supplies treated water in the first tank (54a) to the first humidifying element (23a) and that electrically connects treated water in the first tank (54a) to treated water in the first tank (54a). The second outflow pipe (81b) and the second water supply header (82b) constitute a second supply passage that supplies treated water in the second tank (54b) to the second humidifying element (23b) and that electrically connects treated water in the second tank (54b) to treated water in the second tank (54b).

### <Hermetic Structure of Water Passage>

As described above, in the water passage (45), the tap water pipe (5) is connected to the body containers (71, 76) of the inflow-side insulators (70, 75) via the inlet pipe (61), the body containers (71, 76) of the inflow-side insulators (70, 75) are connected to the water tank body (51) of the electric-discharge water tank (50) via the inflow-side connection pipes (65a, 65b), and the water tank body (51) of the electric-discharge water tank (50) is connected to water supply headers (82a, 82b) via the outflow pipes (81a, 81b). The body containers (71, 76) of the respective inflow-side insulators (70, 75) and the water tank body (51) of the electric-discharge water tank (50) are each a sealed container that allows water and air to flow thereinto and to flow therefrom only through pipes that are connected thereto. Accordingly, the water passage (45) has a hermetic structure that is open to the atmosphere only at the water supply openings of the water supply headers (82a, 82b).

### <Electric Power Source Unit>

The electric power source unit (42) is an alternating-current electric power source that applies a high voltage (for example, a voltage of about 6 kV) to the first electrode (55a) and the second electrode (55b). The electric power source unit (42) applies, to the first electrode (55a) and the second electrode (55b), a voltage having an alternating waveform such that positive and negative alternate. The alternating waveform of the voltage that the electric power source unit (42) applies to the first electrode (55a) and the second electrode (55b) is a square waveform, in which the positive side and the negative side have the same proportion.

### - Operation of Water Treatment Device -

While the water treatment device (40) is operating, the electromagnetic valve (62) is opened, and the electric power source unit (42) applies a voltage to the first electrode (55a) and the second electrode (55b) of the electric-discharge water tank (50).

### <Flow of Water in Inflow Passage>

Approximately a half of tap water that has flowed into the collective pipe (63) of the inlet pipe (61) from the tap water pipe (5) flows into the first branch pipe (64a), and the remaining half flows into the second branch pipe (64b).

The tap water that has flowed into the first branch pipe (64a) flows into the first inflow-side insulator (70), and is sprayed from the spray nozzle (72) to the inner space of the body container (71) to become water droplets and drops. The tap water that has flowed into the second branch pipe (64b) flows into the second inflow-side insulator (75), and is sprayed from the spray nozzle (77) to the inner space of the body container (76) to become water droplets and drops.

Tap water that is supplied from the tap water pipe (5) to the respective inflow-side insulators (70, 75) has been pressurized and has a pressure that is higher than the atmospheric pressure (for example, about 0.2 MPa to 0.4 MPa). The body containers (71, 76) of the respective inflow-side insulators (70, 75) are each a sealed container. Accordingly, the internal pressure of each of the body containers (71, 76) of the inflow-side insulators (70, 75) is higher than the atmospheric pressure. Therefore, tap water accumulated in the body container (71) of the first inflow-side insulator (70) flows into the first inflow-side connection pipe (65a), and flows into the first tank (54a) of the electric-discharge water tank (50) through the first inflow-side connection pipe (65a). Tap water accumulated in the body container (76) of the second inflow-side insulator (75) flows into the second inflow-side connection pipe (65b), and flows into the second tank (54b) of the electric-discharge water tank (50) through the second inflow-side connection pipe (65b).

### <Operation of Electric-Discharge Water Tank>

In the electric-discharge water tank (50), the first electrode (55a), the second electrode (55b), and the electric discharge hole (58) are immersed in water. When a voltage is applied to the first electrode (55a) and the second electrode (55b), electric current density increases in the electric discharge hole (58) of the electric discharge member (56), and water is evaporated by Joule heat that is generated. As a result, a bubble (C) is formed in the electric discharge hole (58).

As illustrated in Fig. 5, the bubble (C) occupies the entirety of the electric discharge hole (58). That is, the entire region of the electric discharge hole (58) is covered by the bubble (C). In this state, the bubble (C) functions as a resistor that breaks electrical connection between the first electrode (55a) and the second electrode (55b) via water. Therefore, the electric potential of water in the first tank (54a) becomes substantially the same as that of the first electrode (55a), and the electric potential of water in the second tank (54b) becomes substantially the same as that of the second electrode (55b). As a result, the interfaces between the bubble (C) and water become electrodes, dielectric breakdown occurs in the bubble (C), and electric discharge (spark discharge) occurs. When electric discharge occurs in the bubble (C), a sterilizing component (for example, a radical, such as hydroxyl radical, or hydrogen peroxide) is generated in water accumulated in the first tank (54a) and the second tank (54b). Then, the water accumulated in the first tank (54a) and the second tank (54b) becomes treated water including the sterilizing component.

Here, in the present embodiment, when the electric discharge unit applies an alternating-waveform voltage to the first electrode (55a) and the second electrode (55b), the polarity of the voltage applied to the electrodes (55a, 55b) alternate at predetermined intervals. Therefore, it is possible to cause spark discharge in the electric discharge hole (58) without causing glow discharge.

That is, if a direct-current electric power source is connected to the electrodes (55a, 55b), the type of electric discharge in the electric discharge hole (58) shifts from spark discharge to glow discharge as the electric current increases. In contrast, in the present embodiment, because the polarity of the voltage applied to the electrodes (55a, 55b) changes before the type of electric discharge in the electric discharge hole (58) shifts from spark discharge to glow discharge, glow discharge does not occur in the electric discharge hole (58) and spark discharge continues to occur. Therefore, thermal breakage of the electric discharge hole (58) due to glow discharge is suppressed, and it is possible to suppress increase in the diameter of the electric discharge hole (58).

### <Flow of Water in Outflow Passage>

As described above, the water tank body (51) of the electric-discharge water tank (50) is a sealed container. Accordingly, the internal pressure of the first tank (54a), into which tap water flows from the first inflow-side insulator (70), and the internal pressure of the second tank (54b), into which tap water flows from the second inflow-side insulator (75), are each higher than the atmospheric pressure. Therefore, treated water that has accumulated in the first tank (54a) of the electric-discharge water tank (50) flows into the first outflow pipe (81a), and flows into the first water supply header (82a) through the first outflow pipe (81a). Treated water that has accumulated in the second tank (54b) of the electric-discharge water tank (50) flows into the second outflow pipe (81b), and flows into the second water supply header (82b) through the second outflow pipe (81b).

Treated water that has flowed into the first water supply header (82a) flows to the outside of the first water supply header (82a) through the water supply opening, and is supplied to the first humidifying element (23a). Treated water that has flowed into the second water supply header (82b) flows to the outside of the second water supply header (82b) through the water supply opening, and is supplied to the second humidifying element (23b).

As described above, water in each of the humidifying elements (23a, 23b) is electrically connected to water in a corresponding one of the water supply headers (82a, 82b). Water in the first water supply header (82a) is electrically connected to water in the first tank (54a) of the electric-discharge water tank (50). Water in the second water supply header (82b) is electrically connected to water in the second tank (54b) of the electric-discharge water tank (50). Therefore, the electric potential of water in the first humidifying element (23 a) is substantially the same as that of water in the first tank (54a), and the electric potential of water in the second humidifying element (23b) is substantially the same as that of water in the second tank (54b).

### - Insulating Member -

As described above, the first insulating member (30a) is disposed below the first humidifying element (23a), and the second insulating member (30b) is disposed below the second humidifying element (23b) (see Fig. 2). Here, the insulating members (30a, 30b) will be described.

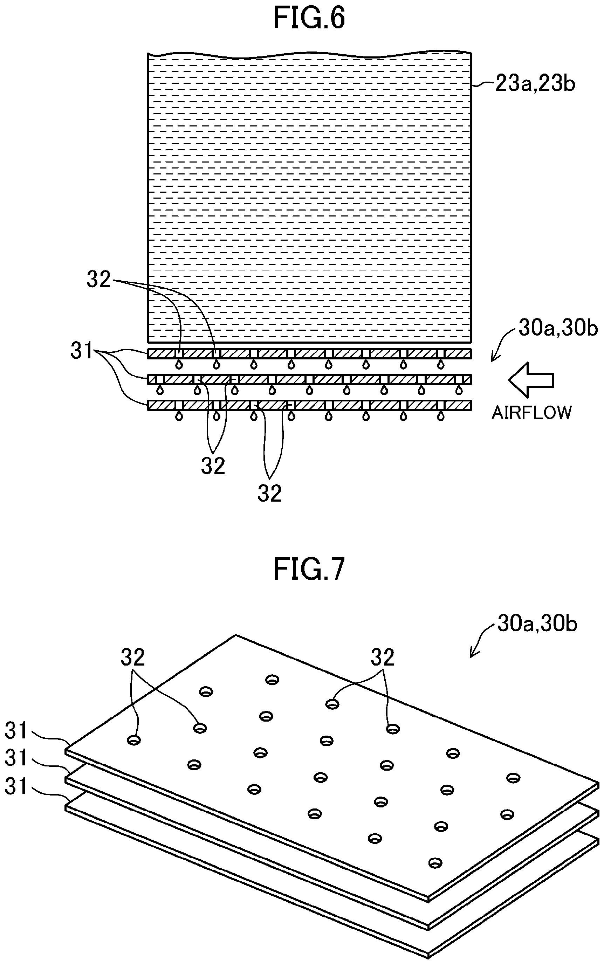

As illustrated in Figs. 6 and 7, each of the insulating members (30a, 30b) includes a plurality of (in the present embodiment, three) dispersion plates (31). Each of the dispersion plates (31) has a rectangular shape. The material of each of the dispersion plates (31) is an electrically insulating resin. The three dispersion plates (31) are arranged so as to face each other with a predetermined distance therebetween in the up-down direction. In each of the dispersion plates (31), a large number of dispersion holes (32), which extend through the dispersion plate (31) in the thickness direction, are formed. As illustrated in Fig. 6, the dispersion holes (32) of each of the dispersion plates (31) are formed at positions that do not overlap the dispersion holes (32) of an adjacent dispersion plate (31) in the up-down direction.

The insulating members (30a, 30b) are respectively configured to electrically insulate water in the drain pan (18) from water in the humidifying elements (23a, 23b) by forming treated water, which has flowed down from the humidifying elements (23a, 23b), into water droplets.

To be specific, water that has flowed down from the humidifying elements (23a, 23b) to the dispersion plates (31) drops through the dispersion holes (32). A part of air that has passed through the heat exchanger (22) bypasses the humidifying elements (23a, 23b) and passes between the dispersion plates (31), which are arranged in the up-down direction. Water that has flowed down through the dispersion holes (32) is blown off by the air that flows between the dispersion plates (31) and become water droplets. The water droplets are scattered in the flow of air, and drop onto the drain pan (18). Air exists between water droplets that flow together with air. As a result, water in the drain pan (18) is electrically insulated from water in the humidifying elements (23a, 23b).

A part of water that has been formed into water droplets in the insulating members (30a, 30b) and scattered may be sucked into the impeller (26) together with air and may be supplied into a room. The scattered water evaporates while flowing together with air.

### - Advantageous Effects of First Embodiment -

In the water passage (45) according to the present embodiment, tap water in a pressurized state is supplied from the tap water pipe (5) to the collective pipe (63) of the inlet pipe (61). The water supply headers (82a, 82b), which are terminal end portions of the outflow passage (80), are open to the atmosphere at the water supply openings thereof. The water passage (45) according to the present embodiment has a hermetic structure that is open to the atmosphere only at the water supply headers (82a, 82b). Therefore, the water passage (45) is maintained in a state in which the internal pressure is higher than the atmospheric pressure in the entirety thereof from the collective pipe (63) of the inlet pipe (61) to the water supply headers (82a, 82b). As a result, in the water passage (45), due to the pressure difference between the collective pipe (63) of the inlet pipe (61) and the water supply headers (82a, 82b), water flows from the collective pipe (63) of the inlet pipe (61) toward the water supply headers (82a, 82b).

Accordingly, with the present embodiment, it is possible to supply treated water from the electric-discharge water tank (50) to the humidifying elements (23a, 23b) without using a pump, even in a state in which there is substantially no height difference between the upper end portions of the humidifying elements (23a, 23b) and the electric-discharge water tank (50). As a result, it is possible to improve the usability of the water treatment device (40) by reducing restrictions on the positional relationship between the humidifying elements (23a, 23b) and the electric-discharge water tank (50), while suppressing increase in complexity of configuration and increase in manufacturing cost.

In the electric-discharge water tank (50) according to the present embodiment, the open end of the first outflow pipe (81a) is disposed above the lower end of the first electrode (55a) and the electric discharge hole (58), and the open end of the second outflow pipe (81b) is disposed above the lower end of the second electrode (55b) and the electric discharge hole (58). Therefore, in the electric-discharge water tank (50) according to the present embodiment, the first electrode (55a) and the second electrode (55b) are maintained to be immersed in water, and the electric discharge hole (58) is maintained to be located in water. Accordingly, with the present embodiment, it is possible to reliably cause electrical discharge in the electric discharge hole (58) of the electric-discharge water tank (50) and to reliably produce treated water including a sterilizing component in the electric-discharge water tank (50).

In the water treatment device (40) according to the present embodiment, water in the electric-discharge water tank (50) is electrically insulated from water in the tap water pipe (5) by providing the inflow-side insulators (70, 75) in the respective inflow-side branch passages (64a, 65a, 64b, 65b), and water in the electric-discharge water tank (50) is electrically insulated from water in the drain pan (18) by providing the insulating members (30a, 30b) below the respective humidifying elements (23a, 23b). Therefore, with the present embodiment, it is possible to produce treated water by continuously supplying tap water to the electric-discharge water tank (50) and to continuously supply treated water produced in the electric-discharge water tank (50) to the humidifying elements (23a, 23b).

In the water treatment device (40) according to the present embodiment, each of the inflow-side insulators (70, 75) electrically insulates water that flows into the body container (76) and water that flows out from the body container (76) from each other by spraying water to the inner space of the body container (76), which is a sealed container filled with air, from the spray nozzle (77). Accordingly, with the present embodiment, it is possible to electrically insulate water in the electric-discharge water tank (50) from water in the tap water pipe (5) while reliably maintaining hermeticity of the inflow passage (60).

In the water treatment device (40) according to the present embodiment, the electric potential of water in the first humidifying element (23a) is substantially the same as that of water in the first tank (54a) of the electric-discharge water tank (50), and the electric potential of water in the second humidifying element (23b) is substantially the same as that of water in the second tank (54b) of the electric-discharge water tank (50). Accordingly, when the potential difference between water in the first tank (54a) and the second tank (54b) alternates between positive and negative, the potential difference between water in the first humidifying element (23a) and water in the second humidifying element (23b) also alternates between positive and negative. In one of the first humidifying element (23a) and the second humidifying element (23b) that has a higher electric potential, calcium does not precipitate and becomes ionized, and the amount of precipitating scale (such as calcium carbonate) decreases. Therefore, with the present embodiment, it is possible to suppress precipitation of calcium included in treated water in the humidifying elements (23a, 23b) and to prolong the lifetime of the humidifying elements (23a, 23b).

### - Modification 1 of First Embodiment -

In the insulating members (30a, 30b) according to the present embodiment, a large number of protrusions may be formed on the surface of each of the dispersion plates (31). In this case, flow of air that passes between the dispersion plates (31) is disturbed by the protrusions, and water dropped from the dispersion holes (32) can be efficiently formed into droplets.

### - Modification 2 of First Embodiment -

In the insulating members (30a, 30b) according to the present embodiment, each of the dispersion plates (31) may have a structure such that a non-woven cloth of resin fibers is sandwiched between a pair of resin plates having punched holes. In this case, because water that has dropped from the humidifying elements (23a, 23b) onto the dispersion plates (31) permeates into the non-woven cloths, the water is dispersed in the entireties of the dispersion plates (31).

### - Modification 3 of First Embodiment -

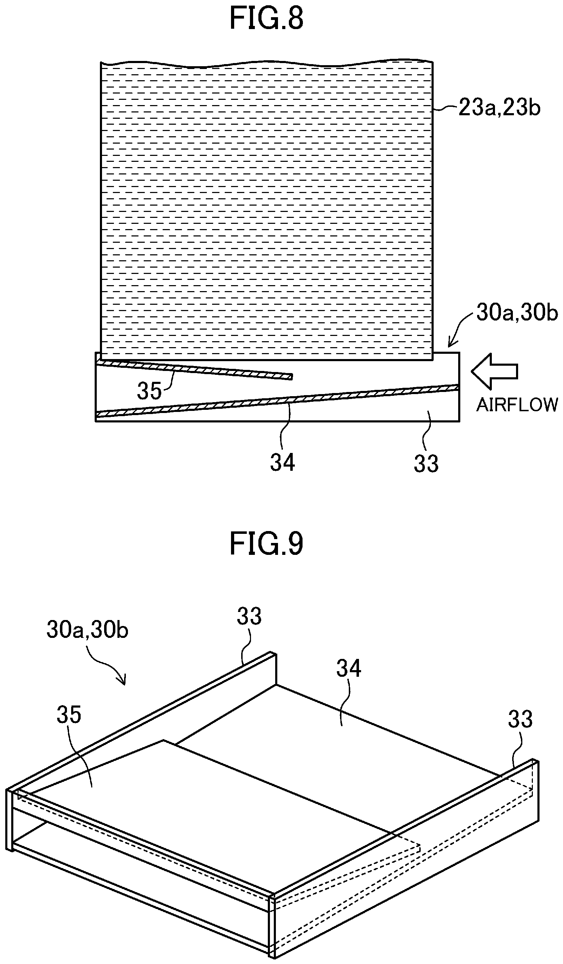

Each of the insulating members (30a, 30b) according to the present embodiment may have a tray-like shape as illustrated in Figs. 8 and 9.

Each of the insulating members (30a, 30b) according to the present modification includes two side plates (33), one bottom plate (34), and one cover plate (35). Each of the side plates (33), the bottom plate (34), and the cover plate (35) has a rectangular flat-plate-like shape.

The bottom plate (34) and the cover plate (35) are disposed between the side plates (33) that face each other. The bottom plate (34) extends from the airflow-upstream ends (the right ends in Fig. 8) to the airflow-downstream ends (the left ends in Fig. 8) of the side plates (33). The bottom plate (34) is inclined so as to become lower toward the airflow-downstream end thereof. The cover plate (35) is disposed above the bottom plate (34) at a distance from the bottom plate (34). The cover plate (35) extends from the airflow-downstream ends of the side plates (33) to central parts of the side plates (33) in the longitudinal direction. The cover plate (35) is inclined so as to become higher toward the airflow-downstream end thereof. A gap, through which air can pass, is formed between the airflow-upstream end (the right end in Fig. 8) of the cover plate (35) and the bottom plate (34).

Apart of water that has dropped from the humidifying elements (23a, 23b) drops onto the cover plate (35), and then drops onto the bottom plate (34); and the remaining part of the water drops directly onto the bottom plate (34). Water that drops from the cover plate (35) onto the bottom plate (34) is blown off by the flow of air that flows into the gap between the cover plate (35) and the bottom plate (34), and becomes water droplets. Water that has dropped onto the bottom plate (34) is blown off by the flow of air along the bottom plate (34), and becomes water droplets. Air exists between water droplets that flow together with air. As a result, water in the drain pan (18) is electrically insulated from water in the humidifying elements (23a, 23b).

A part of water that has been formed into water droplets in the insulating members (30a, 30b) and scattered may be sucked into the impeller (26) together with air and may be supplied into a room. The scattered water evaporates while flowing together with air.

In the insulating members (30a, 30b) according to the present modification, a large number of protrusions may be formed on the upper surface of the bottom plate (34) in order to disturb the flow of water along the upper surface and the flow of air along the upper surface. In the insulating members (30a, 30b) according to the present modification, the cover plate (35) may have a wave-like shape. In this case, preferably, the cover plate (35) is disposed so that edge lines of the wave-like shape extend in the airflow direction.

### - Modification 4 of First Embodiment -

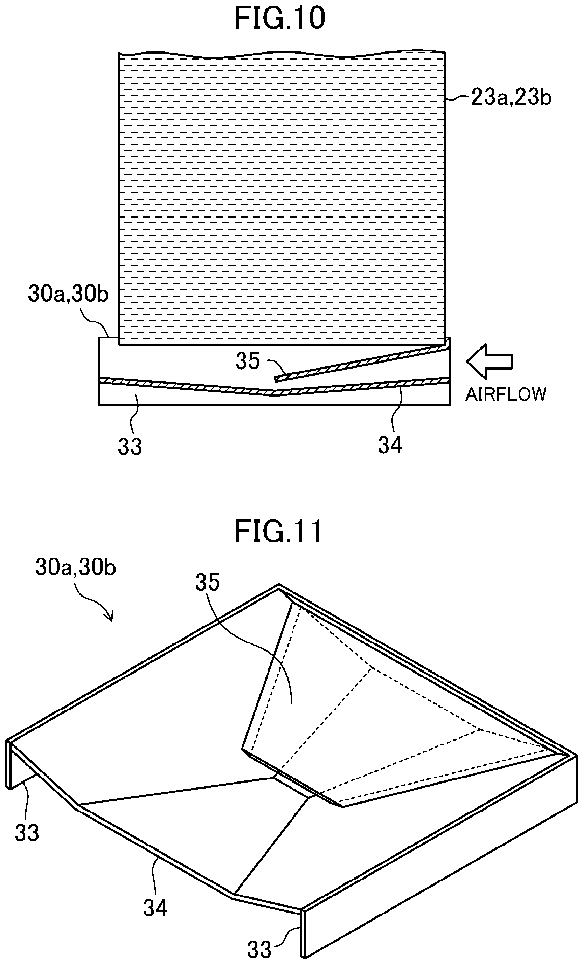

Each of the insulating members (30a, 30b) according to the present embodiment may have a tray-like shape as illustrated in Figs. 10 and 11.

Each of the insulating members (30a, 30b) according to the present modification includes two side plates (33), one bottom plate (34), and one cover plate (35). Each of the side plates (33) has a rectangular flat-plate-like shape. The bottom plate (34) has a shape such that four inclined surfaces are arranged in such a way that a central part of the bottom plate (34) is the lowest. The cover plate (35) has a substantially trapezoidal flat-plate-like shape.

The bottom plate (34) is disposed between the side plates (33) that face each other. Edges of the bottom plate (34) at the highest position extend along upper ends of the side plates (33), and an edge of the bottom plate (34) that is lower than the highest part and higher than the central part extends in a direction perpendicular to the side plates (33). The cover plate (35) is disposed above the bottom plate (34) at a distance from the bottom plate (34). The cover plate (35) extends from the airflow-upstream ends (the right ends in Fig. 10) of the side plates (33) to central parts of the side plates (33) in the longitudinal direction. The cover plate (35) is inclined so as to be become lower toward the airflow-downstream end thereof (the left end in Fig. 10). A passage, through which air can pass, is formed between the cover plate (35) and the bottom plate (34). The cross-sectional area of the passage gradually decreases in the airflow-downstream direction.

Apart of water that has dropped from the humidifying elements (23a, 23b) drops onto the cover plate (35), and then drops onto the bottom plate (34); and the remaining part of the water drops directly onto the bottom plate (34). Water that has dropped onto the bottom plate (34) collects near the central part, which is the lowest part, of the bottom plate (34). The flow rate of air that flows through the passage between the cover plate (35) and the bottom plate (34) gradually increases as the air flows in the airflow-downstream direction. Water that has collected near the central part of the bottom plate (34) is blown off by airflow whose flow rate has increased while passing through the passage between the cover plate (35) and the bottom plate (34), and becomes water droplets. Air exists between water droplets that flow together with air. As a result, water in the drain pan (18) is electrically insulated from water in the humidifying elements (23a, 23b).

A part of water that has been formed into water droplets in the insulating members (30a, 30b) and scattered may be sucked into the impeller (26) together with air and may be supplied into a room. The scattered water evaporates while flowing together with air.

### - Modification 5 of First Embodiment -

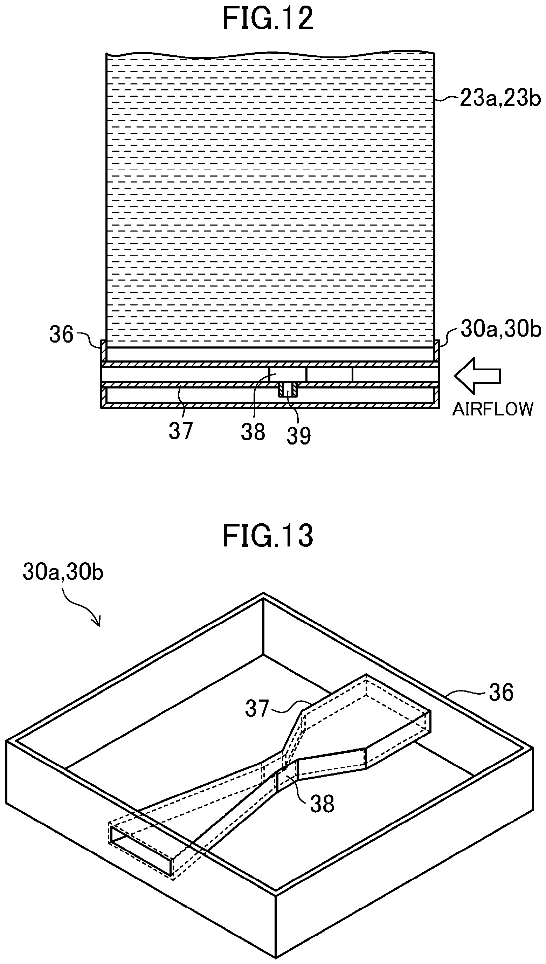

Each of the insulating members (30a, 30b) according to the present embodiment may have a tray-like shape as illustrated in Figs. 12 and 13.

Each of the insulating members (30a, 30b) according to the present modification includes a tray body (36) having a tray-like shape and a Venturi tube (37). The tray body (36) is shaped like a rectangular parallelepiped whose upper side is open. The Venturi tube (37) has a rectangular cross-sectional shape. The Venturi tube (37) includes a constricted portion (38) at a central part thereof in the longitudinal direction, and a suction port (39) is formed in a lower surface of the constricted portion (38). One end of the Venturi tube (37) has an opening in a side plate of the tray body (36) on the airflow-upstream side (the right side in Fig. 12). The other end of the Venturi tube (37) has an opening in a side plate of the tray body (36) on the airflow-downstream side (the left side in Fig. 12).

Water that has dropped from the humidifying elements (23a, 23b) accumulates in a bottom part of the tray body (36). Air flows in the Venturi tube (37), and the pressure of the air becomes lower than the atmospheric pressure in the constricted portion (38). Therefore, water that has accumulated in the bottom part of the tray body (36) is sucked from the suction port (39) into the Venturi tube (37), is blown off by air that flows in the Venturi tube (37), and becomes water droplets. Air exists between water droplets that flow together with air. As a result, water in the drain pan (18) is electrically insulated from water in the humidifying elements (23a, 23b).

A part of water that has been formed into water droplets in the insulating members (30a, 30b) and scattered may be sucked into the impeller (26) together with air and may be supplied into a room. The scattered water evaporates while flowing together with air.

### «Second Embodiment»

A second embodiment will be described. Here, differences between an air-handling unit (1) according to the present embodiment and the air-handling unit (1) according to the first embodiment will be described.

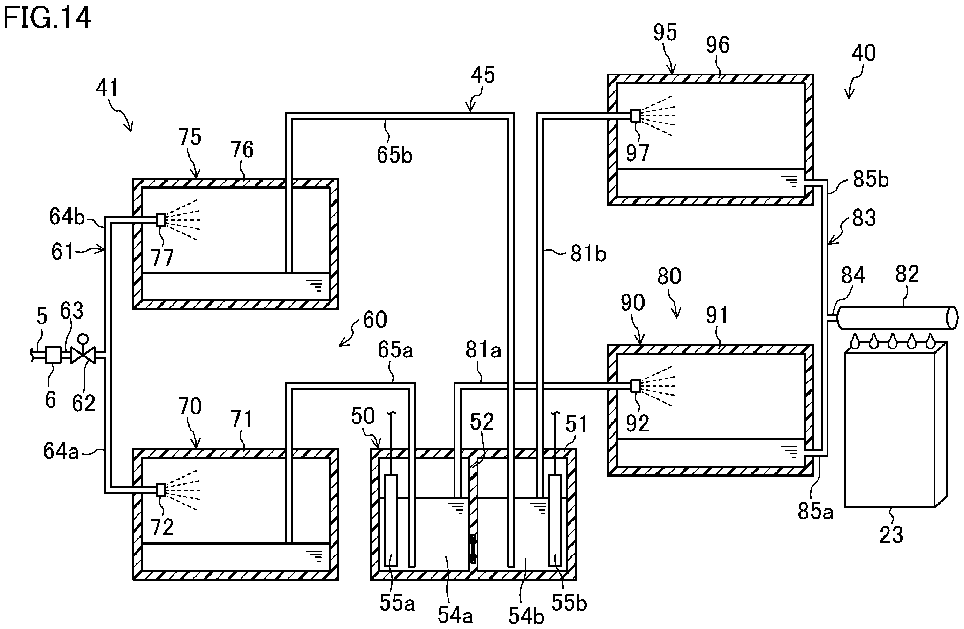

As illustrated in Fig. 14, the air-handling unit (1) according to the present embodiment has only one humidifying element (23). In the air-handling unit (1), the insulating members (30a, 30b) are omitted.

### - Configuration of Water Treatment Device -

In a water treatment device (40) according to the present embodiment, an electric-discharge water tank (50), an inflow passage (60), and an outflow passage (80) constitute a water passage (45) through which water flows from a tap water pipe (5) toward the humidifying element (23).

### <Outflow Passage>

The water treatment device (40) according to the present embodiment differs from the water treatment device (40) according to the first embodiment in the configuration of the outflow passage (80). The outflow passage (80) according to the present embodiment is constituted by first and second outflow pipes (91a, 81b), first and second outflow-side insulators (90, 95), an outlet pipe (83), and a water supply header (82).

One end of the first outflow pipe (81a) has an opening in a first tank (54a) of the electric-discharge water tank (50), and the other end of the first outflow pipe (81a) is connected to the first outflow-side insulator (90). As with the first embodiment, in the first tank (54a) of the electric-discharge water tank (50), the open end of the first outflow pipe (81a) is disposed above the lower end of a first electrode (55a) and above an electric discharge hole (58). One end of the second outflow pipe (81b) has an opening in a second tank (54b) of the electric-discharge water tank (50), and the other end of the second outflow pipe (81b) is connected to the second outflow-side insulator (95). As with the first embodiment, in the second tank (54b) of the electric-discharge water tank (50), the open end of the second outflow pipe (81b) is disposed above the lower end of a second electrode (55b) and above the electric discharge hole (58).

The outlet pipe (83) includes a collective pipe (84), a first branch pipe (85a), and a second branch pipe (85b). One end of the first branch pipe (85a) is connected to a first inflow-side insulator (70). One end of the second branch pipe (85b) is connected to a second inflow-side insulator (75). The other end of the first branch pipe (85a) and the other end of the second branch pipe (85b) are connected to one end of the collective pipe (84). The other end of the collective pipe (84) is connected to the water supply header (82).

The water supply header (82) is a cylindrical member, both ends of which are closed. The water supply header (82) is disposed above the humidifying element (23). A plurality of water supply holes (not shown) are formed in a lower part of the water supply header (82). Water that has flowed into the water supply header (82) is supplied to the humidifying element (23) through the water supply holes.

In the outflow passage (80) according to the present embodiment, the collective pipe (84) of the outlet pipe (83) constitutes an outflow-side collective passage. The first outflow pipe (81a) and the first branch pipe (85a) of the outlet pipe (83) constitute a first outflow-side branch passage. The second outflow pipe (81b) and the second branch pipe (85b) of the outlet pipe (83) constitute a second outflow-side branch passage.

The outflow-side insulators (90, 95) respectively include body containers (91, 96) and spray nozzles (92, 97). The body containers (91, 96) are sealed containers filled with air.

In the first outflow-side insulator (90), the first outflow pipe (81a) penetrates into the body container (91) and has an opening in an upper part of the inner space of the body container (91). The spray nozzle (92) is attached to an end portion of the first outflow pipe (81a), which has the opening in the inner space of the body container (91). The spray nozzle (92) sprays treated water supplied from the first outflow pipe (81a). In the first outflow-side insulator (90), the first branch pipe (85a) of the outlet pipe (83) has an opening in a lower part of the inner space of the body container (71) (that is, at a position lower than the spray nozzle (92)).

In the second outflow-side insulator (95), the second outflow pipe (81b) penetrates into the body container (96), and has an opening in an upper part of the inner space of the body container (96). The spray nozzle (97) is attached to an end portion of the second outflow pipe (81b), which has the opening in the inner space of the body container (96). The spray nozzle (77) sprays treated water supplied from the second outflow pipe (81b). In the second inflow-side insulator (75), the second branch pipe (85b) of the outlet pipe (83) has an opening in a lower part of the inner space of the body container (96) (that is, at a position lower than the spray nozzle (97)).

In the respective outflow-side insulators (90, 95), treated water, which is sprayed from the spray nozzles (92, 97) to the inner spaces of the body containers (91, 96), becomes water droplets and drops, accumulates in the body containers (91, 96), and subsequently flows into the branch pipes (85a, 85b) of the outlet pipe (83). In the body containers (91, 96), the positions of water surfaces in the inner spaces substantially coincide with the positions of the open ends of the branch pipes (85a, 85b) of the outlet pipe (83). Accordingly, in the respective outflow-side insulators (90, 95), the water surfaces in the inner spaces of the body containers (91, 96) are lower than the spray nozzles (92, 97). Therefore, in the respective outflow-side insulators (90, 95), air exists between water droplets that are sprayed from the spray nozzles (92, 97) and that drop, and water that flows into the body containers (91, 96) and water that flows out from the body containers (91, 96) are electrically insulated from each other.

### <Hermetic Structure of Water Passage>

In the water passage (45) according to the present embodiment, the tap water pipe (5) is connected to the body containers (71, 76) of the inflow-side insulators (70, 75) via the inlet pipe (61), the body containers (71, 76) of the inflow-side insulators (70, 75) are connected to the water tank body (51) of the electric-discharge water tank (50) via the inflow-side connection pipes (65a, 65b), the water tank body (51) of the electric-discharge water tank (50) is connected to the outflow-side insulators (90, 95) via the outflow pipes (81a, 81b), and the outflow-side insulators (90, 95) are connected to the water supply header (82) via the outlet pipe (83). The body containers (71, 76) of the respective inflow-side insulators (70, 75), the water tank body (51) of the electric-discharge water tank (50), and the body containers (91, 96) of the respective outflow-side insulators (90, 95) are each a sealed container that allows water and air to flow thereinto and to flow therefrom only through pipes that are connected thereto. Accordingly, the water passage (45) has a hermetic structure that is open to the atmosphere only at the water supply holes of the water supply header (82).

### - Operation of Water Treatment Device -

While the water treatment device (40) is operating, an electromagnetic valve (62) is opened, and an electric power source unit (42) applies a voltage to the first electrode (55a) and the second electrode (55b) of the electric-discharge water tank (50).

Descriptions of the flow of water in the inflow passage (60) and the operation of the electric-discharge water tank (50), which are the same as those in the first embodiment, will be omitted.

### <Flow of Water in Outflow Passage>

As described above, the water tank body (51) of the electric-discharge water tank (50) is a sealed container. Accordingly, the internal pressure of the first tank (54a), into which tap water flows from the first inflow-side insulator (70), and the internal pressure of the second tank (54b), into which tap water flows from the second inflow-side insulator (75), are each higher than the atmospheric pressure. Therefore, treated water that has accumulated in the first tank (54a) of the electric-discharge water tank (50) flows into the first outflow pipe (81a), and treated water accumulated in the second tank (54b) of the electric-discharge water tank (50) flows into the second outflow pipe (81b).

Treated water that has flowed into the first outflow pipe (81a) flows into the first outflow-side insulator (90), is sprayed from the spray nozzle (92) to the inner space of the body container (91), and becomes water droplets and drops. Treated water that has flowed into the second outflow pipe (81b) flows into the second outflow-side insulator (95), is sprayed from the spray nozzle (97) to the inner space of the body container (96), and becomes water droplets and drops.

As described above, the body containers (91, 96) of the respective outflow-side insulators (90, 95) are sealed containers. Accordingly, the internal pressure of each of the body containers (91, 96) of the respective outflow-side insulators (90, 95) is higher than the atmospheric pressure. Therefore, treated water that has accumulated in the body container (91) of the first outflow-side insulator (90) flows into the first branch pipe (85a) of the outlet pipe (83), and treated water that has accumulated in the body container (96) of the second outflow-side insulator (95) flows into the second branch pipe (85b) of the outlet pipe (83). Treated water in the first branch pipe (85a) and treated water in the second branch pipe (85b) flow into and join in the collective pipe (84) of the outlet pipe (83), and subsequently flow into the water supply header (82). Treated water that has flowed into the water supply header (82) is supplied to the humidifying element (23).

### «Third Embodiment»

A third embodiment will be described. An air-handling unit (1) according to the present embodiment differs from the air-handling unit (1) according to the second embodiment in the configuration of the water treatment device (40). Here, differences between a water treatment device (40) according to the present embodiment and the water treatment device (40) according to the second embodiment will be described.

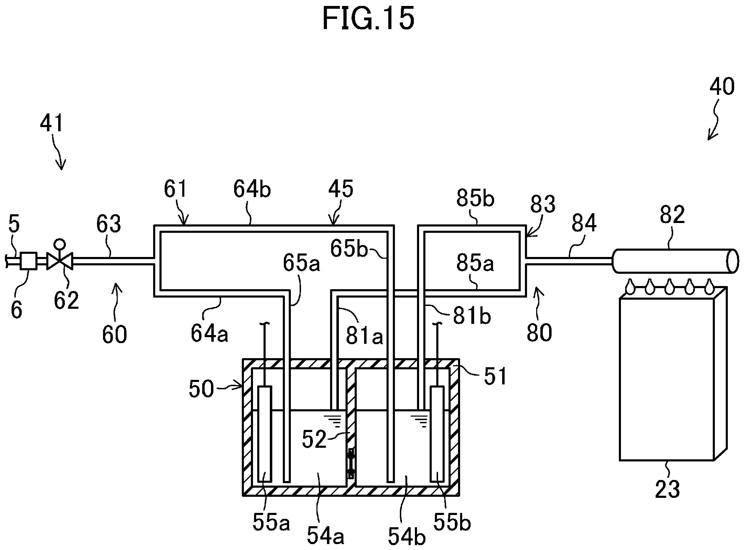

As illustrated in Fig. 15, in the water treatment device (40) according to the present embodiment, the first inflow-side insulator (70) and the second inflow-side insulator (75) are omitted. In an inflow passage (60) according to the present embodiment, a first branch pipe (64a) of an inlet pipe (61) is directly connected to a first inflow-side connection pipe (65a), and a second branch pipe (64b) of the inlet pipe (61) is directly connected to a second inflow-side connection pipe (65b). In the water treatment device (40) according to the present embodiment, the first outflow-side insulator (90) and the second outflow-side insulator (95) are omitted. In an outflow passage (80) according to the present embodiment, a first outflow pipe (81a) is directly connected to a first branch pipe (85a) of an outlet pipe (83), and a second outflow pipe (81b) is directly connected to a second branch pipe (85b) of the outlet pipe (83).

The water treatment device (40) according to the present embodiment intermittently supplies treated water to a humidifying element (23). To be specific, the water treatment device (40) according to the present embodiment alternately performs an operation of producing treated water in an electric-discharge water tank (50) and an operation of supplying treated water in the electric-discharge water tank (50) to the humidifying element (23).

In the operation of producing treated water, an electromagnetic valve (62) is closed, and a voltage is applied to a first electrode (55a) and a second electrode (55b) of the electric-discharge water tank (50). Because the electromagnetic valve (62) is closed, water does not flow in a water passage (45). When a voltage is applied to the first electrode (55a) and the second electrode (55b), electric discharge occurs in the electric-discharge water tank (50), and a sterilizing component is generated.

In the operation of supplying treated water, the electromagnetic valve (62) is opened, and application of a voltage to the first electrode (55a) and the second electrode (55b) of the electric-discharge water tank (50) is stopped. In the state in which application of a voltage to the first electrode (55a) and the second electrode (55b) is stopped, the electric potential of water in a first tank (54a) and a second tank (54b) of the electric-discharge water tank (50) is substantially zero (that is, the ground potential). When the electromagnetic valve (62) is opened, tap water is supplied from the tap water pipe (5) to the first tank (54a) and the second tank (54b), and treated water in the first tank (54a) and the second tank (54b) is supplied to the humidifying element (23) via the water supply header (82).

### <<Other Embodiments>>

### - First Modification -

Use of the water treatment device (40) according to each of the embodiments described above is not limited to supply of treated water to the humidifying element (23). For example, treated water obtained by using the water treatment device (40) may be atomized and supplied to a bathroom or the like.

### - Second Modification -

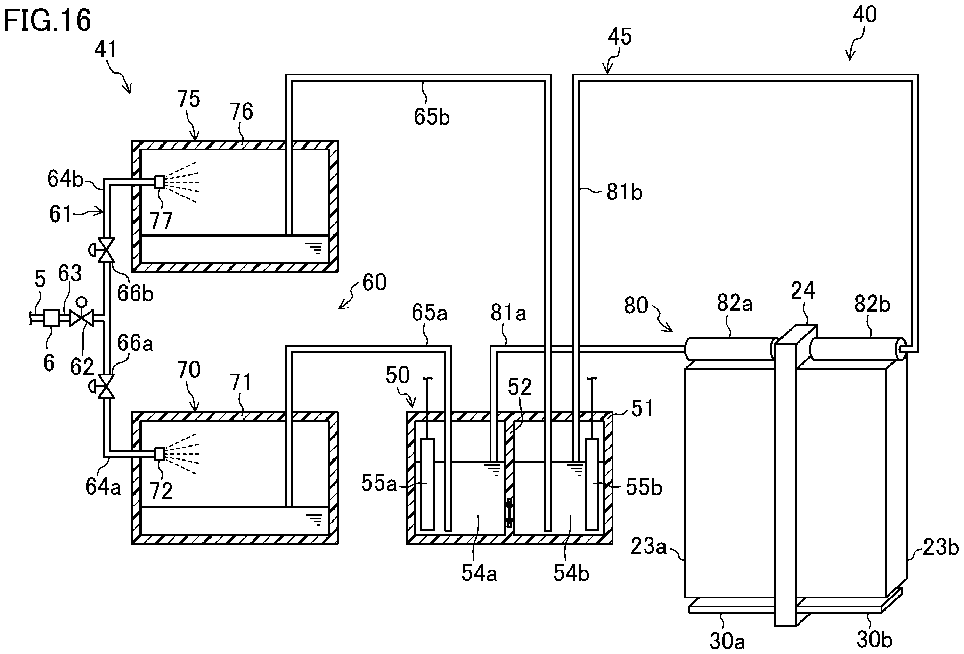

As illustrated in Fig. 16, in the water treatment device (40) according to each of the embodiments described above, flow control valves (66a, 66b) may be provided in the respective branch pipes (64a, 64b) of the inlet pipe (61). The water treatment device (40) illustrated in Fig. 16 is an application of the present modification to the water treatment device (40) according to the first embodiment. In the inlet pipe (61) according to the present modification, a first flow control valve (66a) is provided in the first branch pipe (64a), and a second flow control valve (66b) is provided in the second branch pipe (64b).

The opening degrees of the flow control valves (66a, 66b) of the inlet pipe (61) are respectively adjusted so that the flow rate of tap water that flows in the first branch pipe (64a) and the flow rate of tap water that flows in the second branch pipe (64b) are equal to each other.

When the flow rates of tap water that flows in the respective branch pipes (64a, 64b) substantially coincide with each other, the water levels in the body containers (71, 76) of the respective inflow-side insulators (70, 75) are substantially equal to each other. As a result, in the body containers (71, 76) of the respective inflow-side insulators (70, 75), the distances from the spray nozzles (72, 77) to the water surfaces become substantially equal to each other, and it is possible to reliably electrically insulate water that flows in the inlet pipe (61) and water that has accumulated in the body containers (71, 76) from each other.

When the flow rates of tap water that flows in the branch pipes (64a, 64b) substantially coincide with each other, the concentration of a sterilizing component in treated water produced in the first tank (54a) and the concentration of the sterilizing component in treated water produced in the second tank (54b) are substantially equal to each other. As a result, it is possible to supply treated water including a sterilizing component with substantially equal concentration to the first humidifying element (23a) and the second humidifying element (23b).

### - Third Modification -

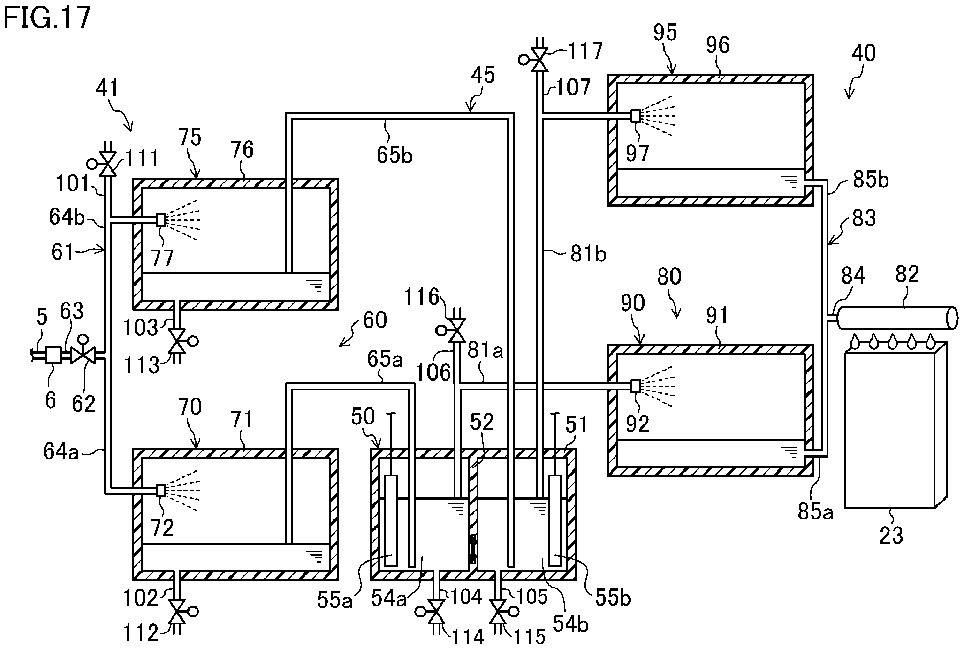

As illustrated in Fig. 17, the water treatment device (40) according to each of the embodiments described above may include drainpipes (101 to 107) and drain valves (111 to 117) for draining water from the water passage (45). A water treatment device (40) illustrated in Fig. 17 is an application of the present modification to the water treatment device (40) according to the second embodiment.

In the present modification, a first drainpipe (101) including a first drain valve (111) is connected to a part of the inlet pipe (61) on the downstream side of the electromagnetic valve (62). In Fig. 17, the first drainpipe (101) is connected to the second branch pipe (64b).

In the present modification, a second drainpipe (102) including a second drain valve (112) is connected to the body container (71) of the first inflow-side insulator (70). The second drainpipe (102) is connected to a bottom part of the body container (71). In the present modification, a third drainpipe (103) including a third drain valve (113) is connected to the body container (76) of the second inflow-side insulator (75). The third drainpipe (103) is connected to a bottom part of the body container (76).

In the present modification, a fourth drainpipe (104) including a fourth drain valve (114) is connected to the first tank (54a) of the electric-discharge water tank (50). The fourth drainpipe (104) is connected to a bottom part of the first tank (54a). In the present modification, a fifth drainpipe (105) including a fifth drain valve (115) is connected to the second tank (54b) of the electric-discharge water tank (50). The fifth drainpipe (105) is connected to a bottom part of the second tank (54b).

In the present modification, a sixth drainpipe (106) including a sixth drain valve (116) is connected to the first outflow pipe (81a) of the outflow passage (80). In the present modification, a seventh drainpipe (107) including a seventh drain valve (117) is connected to the second outflow pipe (81b) of the outflow passage (80).

If water remains accumulated in the water passage (45) while the water treatment device (40) is stopped, various bacteria may grow in the water accumulated in the water passage (45). Therefore, the water treatment device (40) according to the present modification opens the drain valves (111 to 117) and drains water from the water passage (45) when the water treatment device (40) is stopped.

### - Fourth Modification -

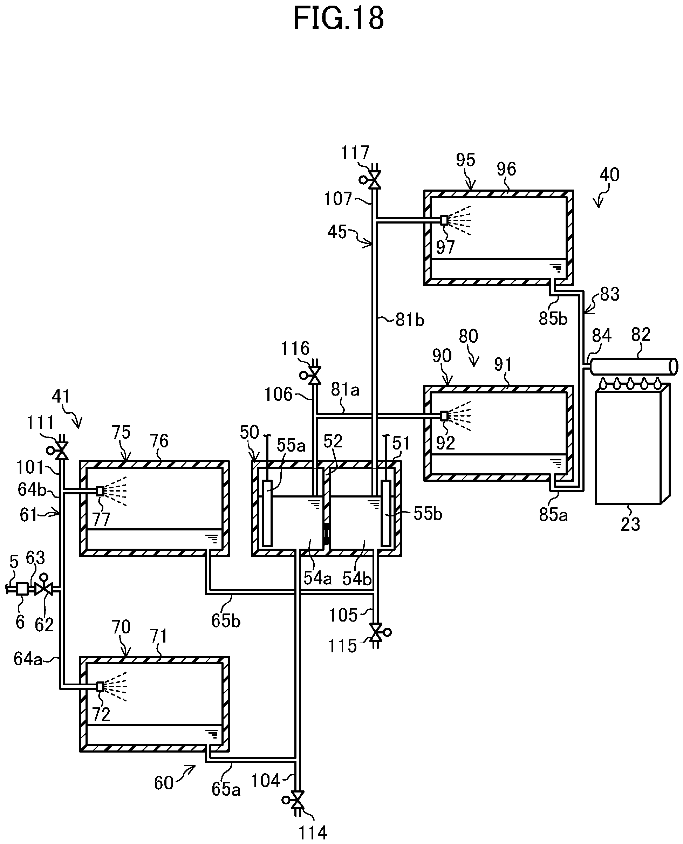

As illustrated in Fig. 18, in the water treatment device (40) according to the third modification, the second drainpipe (102), the second drain valve (112), the third drainpipe (103), and the third drain valve (113) may be omitted.

A water treatment device (40) according to the present modification differs from the water treatment device (40) according to the third modification illustrated in Fig. 17 in the arrangement of the first inflow-side connection pipe (65a) and the second inflow-side connection pipe (65b) of the inflow passage (60). One end of the first inflow-side connection pipe (65a) according to the present modification is connected to a bottom part of the body container (71) of the first inflow-side insulator (70), and the other end of the first inflow-side connection pipe (65a) is connected to a bottom part of the first tank (54a) of the electric-discharge water tank (50). One end of the second inflow-side connection pipe (65b) according to the present modification is connected to a bottom part of the body container (76) of the second inflow-side insulator (75), and the other end of the second inflow-side connection pipe (65b) is connected to a bottom part of the second tank (54b) of the electric-discharge water tank (50).

In the water treatment device (40) according to the present modification, the fourth drainpipe (104) is connected to the first inflow-side connection pipe (65a). When the fourth drain valve (114) of the fourth drainpipe (104) is opened, water is drained from both of the body container (71) of the first inflow-side insulator (70) and the first tank (54a) of the electric-discharge water tank (50). In the water treatment device (40) according to the present modification, the fifth drainpipe (105) is connected to the second inflow-side connection pipe (65b). When the fifth drain valve (115) of the fifth drainpipe (105) is opened, water is drained from both of the body container (76) of the second inflow-side insulator (75) and the second tank (54b) of the electric-discharge water tank (50).

### - Fifth Modification -

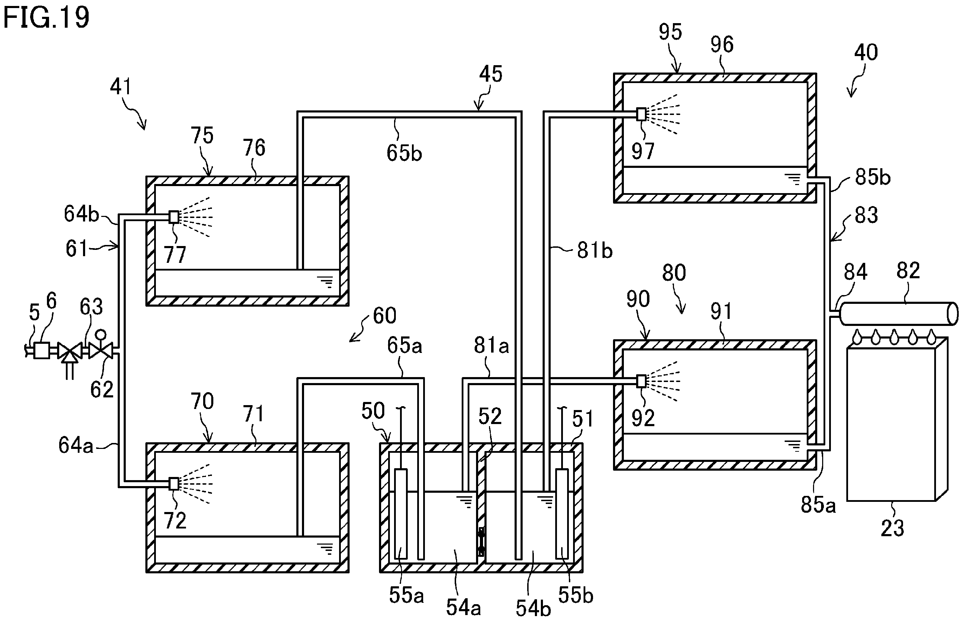

As illustrated in Fig. 19, in the water treatment device (40) according to each of the embodiments described above, a three-way valve (67) may be provided in the inlet pipe (61). A water treatment device (40) illustrated in Fig. 19 is an application of the present modification to the water treatment device (40) according to the second embodiment. In the inlet pipe (61) according to the present modification, the three-way valve (67) is disposed in a part of the collective pipe (63) between the electromagnetic valve (62) and the joint (6).

A first port of the three-way valve (67) is connected to the electromagnetic valve (62), and a second port of the three-way valve (67) is connected to the joint (6). A third port of the three-way valve (67) is configured so that an air pump (not shown) can be connected thereto. The three-way valve (67) is switched between a state in which the first port communicates with the second port and is disconnected from the third port and a state in which the first port communicates with third port and is disconnected from the second port.

As described in the third modification, if water remains accumulated in the water passage (45) while the water treatment device (40) is stopped, various bacteria may grow in the water accumulated in the water passage (45). Therefore, when stopping the water treatment device (40) according to the present modification, an air pump is connected to the three-way valve (67), and water is drained from the water passage (45).

That is, in a case where the water treatment device (40) according to the present modification stops, an operator connects an air pump to the third port of the three-way valve (67), and switches the three-way valve (67) to the state in which the first port communicates with the third port. Next, the operator supplies air that is pressurized by the air pump from the three-way valve (67) to the water passage (45). Then, water in the water passage (45) is pushed by air that flows from the three-way valve (67) and is finally drained from the water supply header (82).

### Industrial Applicability

As heretofore described, the present invention is applicable to a water treatment device that produces treated water including a sterilizing component and to a humidifying apparatus including the water treatment device.

### Reference Signs List

1 air-handling unit (humidifying apparatus)
23a first humidifying element
23b second humidifying element
40 water treatment device
42 electric power source unit (alternating electric power source)
50 electric-discharge water tank
52 central separation wall (partition plate)
54a first tank
54b second tank
55a first electrode
55b second electrode
56 electric discharge member (partition plate)
58 electric discharge hole
60 inflow passage
63 collective pipe (inflow-side collective passage)
64a first branch pipe (first inflow-side branch passage)
64b second branch pipe (second inflow-side branch passage)
65a first inflow-side connection pipe (first inflow-side branch passage)
65b second inflow-side connection pipe (second inflow-side branch passage)
70 first inflow-side insulator
75 second inflow-side insulator
80 outflow passage
81a first outflow pipe (first outflow-side branch passage) (first supply passage)
81b second outflow pipe (second outflow-side branch passage) (second supply passage)
82a first water supply header (first supply passage)
82b second water supply header (second supply passage)
84 collective pipe (outflow-side collective passage)
85a first branch pipe (first outflow-side branch passage)
85b second branch pipe (second outflow-side branch passage)
90 first outflow-side insulator
95 second outflow-side insulator
C bubble

## Claims

1. A water treatment device comprising:
a water treatment tank (50) that is formed like a sealed container and that produces treated water including a sterilizing component;
an inflow passage (60) that is connected to water supply equipment that supplies pressurized water and through which water supplied from the water supply equipment flows into the water treatment tank (50); and
an outflow passage (80) that is connected to the water treatment tank (50) and through which the treated water flows out from the water treatment tank (50),
wherein the inflow passage (60), the water treatment tank (50), and the outflow passage (80) constitute a water passage (45), and
wherein the water passage (45) has a hermetic structure that is open to an atmosphere only at a terminal end portion of the outflow passage (80).

2. The water treatment device according to Claim 1,
wherein the water treatment tank (50) includes a first electrode (55a) and a second electrode (55b) for causing electric discharge and is configured to generate a sterilizing component by electric discharge.

3. The water treatment device according to Claim 2,
wherein the water treatment tank (50) includes a partition plate (52, 56) that has electrically insulating properties and that divides an inner space of the water treatment tank (50) into a first tank (54a) in which the first electrode (55a) is disposed and a second tank (54b) in which the second electrode (55b) is disposed,
wherein an electric discharge hole (58) that extends through the partition plate (52, 56) and that is located in water is formed in the partition plate (52, 56), and
wherein the water treatment tank (50) is configured to cause electric discharge in a bubble (C) formed in the electric discharge hole (58).

4. The water treatment device according to Claim 3,
wherein the outflow passage (80) includes a first outflow pipe (81a) through which the treated water flows out from the first tank (54a) of the water treatment tank (50), and a second outflow pipe (81b) through which the treated water flows out from the second tank (54b) of the water treatment tank (50),
wherein an initial end of the first outflow pipe (81a), the initial end having an opening in the first tank (54a), is disposed above a lower end of the first electrode (55a) and the electric discharge hole (58), and
wherein an initial end of the second outflow pipe (81b), the initial end having an opening in the second tank (54b), is disposed above a lower end of the second electrode (55b) and the electric discharge hole (58).

5. The water treatment device according to Claim 3,
wherein the inflow passage (60) includes
an inflow-side collective passage (63) that is connected to the water supply equipment,
a first inflow-side branch passage (64a, 65a) that connects the inflow-side collective passage (63) to the first tank (54a) of the water treatment tank (50), and
a second inflow-side branch passage (64b, 65b) that connects the inflow-side collective passage (63) to the second tank (54b) of the water treatment tank (50), and
wherein, in each of the first inflow-side branch passage (64a, 65a) and the second inflow-side branch passage (64b, 65b), an inflow-side insulator (70, 75) that is configured to electrically insulate water that flows thereinto and water that flows out therefrom from each other is provided.

6. The water treatment device according to Claim 5,
wherein the inflow-side insulator (70, 75) is formed like a sealed container filled with air, and is configured to electrically insulate water that flows thereinto and water that flows out therefrom from each other by causing air to exist between the water that flows thereinto and the water that flows out therefrom.

7. The water treatment device according to Claim 3,
wherein the outflow passage (80) includes
a first outflow-side branch passage (81a, 85a) that is connected to the first tank (54a) of the water treatment tank (50),
a second outflow-side branch passage (81b, 85b) that is connected to the second tank (54b) of the water treatment tank (50), and
an outflow-side collective passage (84) that is connected to the first outflow-side branch passage (81a, 85a) and the second outflow-side branch passage (81b, 85b),
wherein, in the first outflow-side branch passage (81a, 85a), a first outflow-side insulator (90) that electrically insulates water in the first tank (54a) from water in the outflow-side collective passage (84) is provided, and
wherein, in the second outflow-side branch passage (81b, 85b), a second outflow-side insulator (95) that electrically insulates water in the second tank (54b) from water in the outflow-side collective passage (84) is provided.

8. The water treatment device according to Claim 7,
wherein each of the first outflow-side insulator (90) and the second outflow-side insulator (95) is formed like a sealed container filled with air, and is configured to electrically insulate water that flows thereinto and water that flows out therefrom from each other by causing air to exist between the water that flows thereinto and the water that flows out therefrom.

9. A humidifying apparatus that includes the water treatment device (40) according to Claim 3 and that humidifies air by evaporating treated water produced in the water treatment tank (50) of the water treatment device (40), the humidifying apparatus comprising:
a first humidifying element (23a) for evaporating the treated water supplied from the first tank (54a) of the water treatment tank (50) of the water treatment device (40) by causing the treated water to contact air; and
a second humidifying element (23b) for evaporating the treated water supplied from the second tank (54b) of the water treatment tank (50) of the water treatment device (40) by causing the treated water to contact air, the second humidifying element (23b) being electrically insulated from the first humidifying element (23a),
wherein the outflow passage (80) of the water treatment device (40) includes
a first supply passage (81a, 82a) that supplies the treated water in the first tank (54a) of the water treatment tank (50) to the first humidifying element (23a) so that treated water in the first humidifying element (23a) is electrically connected to the treated water in the first tank (54a), and
a second supply passage (81b, 82b) that supplies the treated water in the second tank (54b) of the water treatment tank (50) to the second humidifying element (23b) so that treated water in the second humidifying element (23b) is electrically connected to the treated water in the second tank (54b), and
wherein the water treatment device (40) further includes an alternating electric power source (42) that applies an alternating voltage to the first electrode (55a) and the second electrode (55b).
